(19) Europäisches Patentamt
European Patent Office
Office européen des brevets

(11) EP 1 423 459 B1

(12) **FASCICULE DE BREVET EUROPEEN**

(45) Date de publication et mention de la délivrance du brevet:
**27.02.2008 Bulletin 2008/09**

(21) Numéro de dépôt: **02794788.6**

(22) Date de dépôt: **13.08.2002**

(51) Int Cl.:
***C08K 3/36*** *(2006.01)* ***C08K 5/548*** *(2006.01)*
***C08L 21/00*** *(2006.01)* ***C01B 33/193*** *(2006.01)*
***B60C 1/00*** *(2006.01)*

(86) Numéro de dépôt international:
**PCT/EP2002/009069**

(87) Numéro de publication internationale:
**WO 2003/016387 (27.02.2003 Gazette 2003/09)**

(54) **COMPOSITION DE CAOUTCHOUC DIENIQUE POUR PNEUMATIQUE COMPRENANT UNE SILICE SPECIFIQUE COMME CHARGE RENFORCANTE**

DIENKAUTSCHUKZUSAMMENSETZUNG FÜR REIFEN MIT EINEM SPEZIELLEN SILIKON ALS VERSTÄRKENDEM FÜLLSTOFF

DIENE RUBBER COMPOSITION FOR TYRES COMPRISING A SPECIFIC SILICON AS A REINFORCING FILLER

(84) Etats contractants désignés:
**AT BE BG CH CY CZ DE DK EE ES FI FR GB GR IE IT LI LU MC NL PT SE SK TR**

(30) Priorité: **13.08.2001 FR 0110871**

(43) Date de publication de la demande:
**02.06.2004 Bulletin 2004/23**

(73) Titulaires:
- **Société de Technologie Michelin**
  **63000 Clermont-Ferrand (FR)**
- **Michelin Recherche et Technique S.A.**
  **1763 Granges-Paccot (CH)**

(72) Inventeurs:
- **DUREL, Olivier**
  **F-63112 Blanzat (FR)**
- **LAPRA, Arnaud**
  **F-63100 Clermont-Ferrand (FR)**
- **HERNANDEZ, Julien**
  **F-92160 Antony (FR)**
- **VALERO, Rémi**
  **F-69005 Lyon (FR)**

(74) Mandataire: **Ribière, Joel et al**
**M.F.P. Michelin,**
**SGD/LG/PI - F35 - Ladoux**
**63040 Clermont-Ferrand Cedex 9 (FR)**

(56) Documents cités:
**EP-A- 0 881 252** **EP-A- 1 043 357**
**WO-A-01/07364** **WO-A-99/28376**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 423 459 B1

## Description

La présente invention se rapporte aux compositions de caoutchoucs diéniques renforcées d'une charge inorganique, destinées à la fabrication de pneumatiques ou de produits semi-finis pour pneumatiques, en particulier aux bandes de roulement de ces pneumatiques.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

De manière connue, le noir de carbone présente de telles aptitudes, ce qui n'est en général pas le cas des charges inorganiques, en particulier des silices. En effet, pour des raisons d'affinités réciproques, ces particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processability") plus difficile qu'en présence de noir de carbone.

Depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

Ceci a été rendu notamment possible grâce à l'emploi, dans les bandes de roulement de ces pneumatiques, de nouvelles compositions de caoutchouc renforcées de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé.

Des bandes de roulement chargées de telles silices hautement dispersibles (notées "HD" ou "HDS" pour "highly dispersible" ou "highly dispersible silica"), utilisables dans les pneumatiques à basse résistance au roulement parfois qualifiés de "Pneus Verts" pour l'économie d'énergie offerte à l'usager ("Green Tyre concept"), ont été abondamment décrites. On se reportera notamment aux demandes de brevet EP 501 227, EP 692 492, EP 692 493, EP 735 088, EP 767 206, EP 786 493, EP 881 252, WO99/02590, WO99/02601, WO99/02602, WO99/06480, WO00/05300, WO00/05301.

Ces documents de l'art antérieur enseignent l'utilisation de silices du type HD présentant une surface spécifique BET comprise entre 100 et 250 $m^2/g$. En pratique, une silice HD à haute surface spécifique faisant référence dans le domaine des "Pneus Verts" est en particulier la silice "Zeosil 1165 MP" (surface BET égale à environ 160 $m^2/g$) commercialisée par la société Rhodia. L'utilisation de cette silice "Zeosil 1165 MP" permet d'obtenir de bons compromis en matière de performance pneumatique, notamment une résistance à l'usure et une résistance au roulement satisfaisantes.

L'intérêt d'utiliser une silice à haute surface spécifique réside principalement dans la possibilité d'augmenter le nombre de liaisons de la silice avec l'élastomère et donc d'augmenter le niveau de renforcement de celui-ci. C'est pourquoi il apparaît avantageux d'utiliser dans des compositions de caoutchouc pour bandes de roulement de pneumatiques, des silices à haute surface spécifique, éventuellement supérieure à celle classiquement utilisée de l'ordre de 160 $m^2/g$, pour notamment améliorer la résistance à l'usure de ces bandes de roulement. Néanmoins, la dispersibilité de la charge et l'accroissement de sa surface spécifique sont considérés comme des caractéristiques antinomiques. En effet, une grande surface spécifique suppose une augmentation des interactions entre objets de charge, et donc une mauvaise dispersion de celle-ci dans la matrice élastomère ainsi qu'une mise en oeuvre malaisée.

Les Demanderesses ont mis en évidence qu'une nouvelle famille de silices hautement dispersibles peut avantageusement être utilisée dans des compositions de caoutchouc pour pneumatiques à titre de charge renforçante. Ces silices présentent une granulométrie, une réactivité de surface et/ou une porosité particulières. De manière inattendue, les Demanderesses ont mis en évidence que les silices à haute surface spécifique de cette nouvelle famille, offrent une capacité de dispersion exceptionnellement élevée au sein de la matrice élastomère étant donnée leur surface spécifique. Elles présentent une difficulté de mise en oeuvre réduite et induisent en outre un abaissement de l'hystérèse des compositions de caoutchouc les contenant.

Les silices de cette nouvelle famille sont susceptibles d'être obtenues par précipitation selon un procédé de préparation original.

Les Demanderesses ont également mis en évidence que ce nouveau procédé de préparation de silice permet d'obtenir des silices hautement dispersibles, particulièrement intéressantes pour une utilisation comme charge renforçante dans des compositions de caoutchouc pour pneumatiques.

Idéalement, une bande de roulement de pneumatique doit obéir à un grand nombre d'exigences techniques parmi lesquelles une résistance élevée à l'usure et une faible résistance au roulement, une adhérence élevée sur tout type de sols, tout en offrant au pneumatique un bon niveau de comportement routier sur véhicule automobile. Ainsi, dans le domaine du pneumatique, recherche-t-on des compositions de caoutchouc qui confèrent le meilleur compromis possible des performances pneumatiques.

Or, les Demanderesses ont découvert de manière surprenante et inattendue lors de leurs recherches, que l'utilisation à titre de charges renforçantes pour la fabrication de bandes de roulement de pneumatique de ces nouvelles silices, et plus particulièrement celles présentant une haute surface spécifique, permet d'atteindre un excellent et surprenant compromis de performances du pneumatique. Ce compromis est supérieur à celui offert par les silices à haute surface spécifique existantes et classiquement utilisées dans les bandes de roulement des "Pneus Verts" et offre un niveau de renforcement jusqu'ici jamais atteint sur de telles bandes de roulement. Ce compromis s'exprime plus particulièrement par une amélioration très significative de la résistance à l'usure accompagnée d'une diminution inattendue de la résistance au roulement, sans nuire pour autant aux autres exigences techniques.

On entend généralement par haute surface spécifique des surfaces BET d'au moins environ 130 $m^2/g$, voire supérieure à 150 $m^2/g$.

En conséquence, un premier objet de l'invention concerne un pneumatique selon la revendication 1. Ladite silice peut être obtenue par un

procédé qui comprend la réaction d'un silicate avec un agent acidifiant ce par quoi l'on obtient une suspension de silice, puis la séparation et le séchage de cette suspension, caractérisé en ce que la réaction du silicate avec l'agent acidifiant est réalisée selon les étapes successives suivantes :

($\alpha$) on forme un pied de cuve aqueux présentant un pH compris entre 2 et 5,

($\beta$) on ajoute audit pied de cuve, simultanément, du silicate et de l'agent acidifiant, de telle manière que le pH du milieu réactionnel soit maintenu entre 2 et 5,

($\gamma$) on arrête l'addition de l'agent acidifiant tout en continuant l'addition de silicate dans le milieu réactionnel jusqu'à l'obtention d'une valeur du pH du milieu réactionnel comprise entre 7 et 10,

($\delta$) on ajoute au milieu réactionnel, simultanément, du silicate et de l'agent acidifiant, de telle manière que le pH du milieu réactionnel soit maintenu entre 7 et 10,

($\varepsilon$) on arrête l'addition du silicate tout en continuant l'addition de l'agent acidifiant dans le milieu réactionnel jusqu'à l'obtention d'une valeur du pH du milieu réactionnel inférieure à 6.

Il a été ainsi trouvé que la succession d'étapes particulières, et en particulier la présence d'une première addition simultanée d'agent acidifiant et de silicate en milieu acide à pH entre 2 et 5 et d'une seconde addition simultanée d'agent acidifiant et de silicate en milieu basique à pH compris entre 7 et 10, constituaient des conditions importantes pour conférer aux produits obtenus leurs caractéristiques et propriétés particulières.

Avantageusement les silices ainsi obtenues présentent une surface spécifique BET entre 45 et 400 et de préférence entre 80 et 300 $m^2/g$, une surface spécifique CTAB entre 40 et 380 et de préférence entre 70 et 280 $m^2/g$ et une taille moyenne (en masse) de particules, notée $d_w$, de 20 à 300 nm.

L'invention a également pour objet une utilisation selon la revendication 13.

Le pneumatique conforme à l'invention est particulièrement destiné à équiper des véhicules de tourisme, camionnettes, véhicules 4x4 (à 4 roues motrices), deux roues, "Poids lourds" (c'est-à-dire métro, bus, engins de transport routier (camions, tracteurs, remorques), véhicules hors-la-route), avions, engins de génie civil, agraire ou de manutention.

L'invention s'applique en particulier aux bandes de roulement des pneumatiques, selon l'invention ces bandes de roulement présentant de manière surprenante à la fois une résistance au roulement diminuée et une résistance à l'usure significativement accrue.

L'invention ainsi que ses avantages seront aisément compris à la lumière de la description et des exemples de réalisation qui suivent, ainsi que des figures ; la figure 1 représentant la courbe du volume des pores en fonction du diamètre des pores, pour le calcul de la largeur de distribution poreuse, notée 1dp, et la figure 2 représentant des courbes de variation de module en fonction de l'allongement pour deux compositions de caoutchouc diénique distinctes, l'une pour pneumatique conforme et l'autre pour pneumatique non conforme à l'invention.

## I MESURES ET TESTS UTILISES

### I.1 Caractérisation des silices

Les silices décrites ci-après consistent de manière connue en des agglomérats de particules, susceptibles de se désagglomérer en ces particules sous l'effet d'une force externe, par exemple sous l'action d'un travail mécanique ou d'ultrasons. Le terme "particule" utilisé dans la présente demande doit être compris dans son sens générique habituel d'agrégat (encore appelé "particule secondaire"), et non dans celui de particule élémentaire (encore appelé "particule primaire") éventuelle pouvant former, le cas échéant, une partie de cet agrégat ; par "agrégat", il faut entendre de manière connue l'ensemble insécable (i.e., qui ne peut être coupé, divisé, partagé) qui est produit lors de la synthèse de la charge, en général formé de particules élémentaires (primaires) agrégées entre elles.
Ces silices sont caractérisées comme indiqué ci-après.

I.1.1 Surface spécifique:

La surface spécifique ("aire massique") BET est déterminée par adsorption de gaz à l'aide de la méthode de Brunauer-Emmett-Teller décrite dans "The Journal of the American Chemical Society" Vol. 60, page 309, février 1938), plus précisément selon la norme française NF ISO 9277 de décembre 1996 [méthode volumétrique multipoints (5 points) - gaz: azote - dégazage : 1heure à 160°C - domaine de pression relative *p/po :* 0.05 à 0.17]
La surface spécifique CTAB est la surface externe déterminée selon la norme française NF T 45-007 de novembre 1987 (méthode B).

I.1.2 Granulométrie :

I.1.2.1 Taille moyenne des particules $d_w$ :

La taille moyenne (en masse) des particules, notée $d_w$, est mesurée de manière classique après dispersion, par désagglomération aux ultrasons, de la charge à analyser dans l'eau.
La mesure est réalisée au moyen d'un sédimentomètre centrifuge à détection rayons X type "XDC" ("X-rays Disk Centrifuge"), commercialisé par la société Brookhaven Instruments, selon le mode opératoire qui suit.
On réalise une suspension de 3,2 g d'échantillon de silice à analyser dans 40 ml d'eau, par action durant 8 minutes, à 60% de puissance (60% de la position maxi du "*output control*"), d'une sonde ultrasons de 1500 W (sonificateur Vibracell 3/4 pouce commercialisé par la société Bioblock) ; après sonification, on introduit 15 ml de la suspension dans le disque en rotation ; après sédimentation pendant 120 minutes, la distribution en masse des tailles de particules est calculée par le logiciel du sédimentomètre "XDC". La moyenne géométrique en masse des tailles de particules ("geometric mean (Xg)" selon l'appellation du logiciel), notée $d_w$, est calculée par le logiciel à partir de l'équation suivante :

$$\log d_w = \frac{\sum_{i=1}^{n} m_i \log d_i}{\sum_{i=1}^{n} m_i},$$

avec $m_i$ masse de l'ensemble des objets dans la classe de diamètre $d_i$

I.1.2.2 Mode XDC :

On peut mesurer, à l'aide de cette méthode d'analyse granulométrique XDC par sédimentation centrifuge, la valeur du mode des particules, notée Mode XDC (la dérivée de la courbe granulométrique cumulée donne une courbe de fréquence dont l'abscisse du maximum (abscisse de la population principale) est appelé le Mode).
La méthode diffère de celle précédemment décrite pour la détermination de $d_w$, par le fait que la suspension formée (silice + eau permutée) est désagglomérée, d'une part, pendant 16 minutes, et, d'autre part, à l'aide d'une sonde à ultra-sons BRANSON de 1500 watts, sans embout, de diamètre 13mm (utilisée à 60 % de la puissance maximale).

I.1.2.3 Largeur de distribution :

La largeur de distribution est mesurée selon la méthode d'analyse granulométrique XDC par sédimentation centrifuge utilisée pour la mesure de la valeur du Mode. On relève alors les valeurs des diamètres passant à 16%, 50% (ou médiane) et 84% (il s'agit de % massique)

La largeur Ld de distribution de taille d'objets, mesurée par granulométrie XDC, après désagglomération aux ultrasons (dans l'eau) avec un temps de sonification de 16 min, correspond au rapport (d84 - d16)/d50 dans lequel dn est la taille pour laquelle on a n% de particules (en masse) de taille inférieure à cette taille (la largeur Ld de distribution est donc calculée sur la courbe granulométrique cumulée, prise dans sa totalité).

La largeur L'd de distribution de taille d'objets inférieure à 500 nm, mesurée par granulométrie XDC, après désagglomération aux ultrasons (dans l'eau) avec un temps de sonification de 16 min, correspond au rapport (d84 - d16)/d50 dans lequel dn est la taille pour laquelle on a n% de particules (en masse), par rapport aux particules de taille inférieure à 500 nm, de taille inférieure à cette taille (la largeur L'd de distribution est donc calculée sur la courbe granulométrique cumulée, tronquée au-dessus de 500 nm).

I.1.3 Porosimétrie :

I.1.3.1 la largeur de distribution de taille de pore

Le paramètre L/IF caractérisant la largeur de distribution de taille de pore est déterminé par porosimétrie au mercure. La mesure est réalisée à l'aide des porosimètres PASCAL 140 et PASCAL 440 commercialisés par Thermo-Finnigan, en opérant de la façon suivante : une quantité d'échantillon comprise entre 50 et 500 mg (dans le cas présent 140 mg) est introduite dans une cellule de mesure. Cette cellule de mesure est installée sur le poste de mesure de l'appareil PASCAL 140. L'échantillon est ensuite dégazé sous vide, pendant le temps nécessaire pour atteindre une pression de 0,01 kPa (typiquement de l'ordre de 10 minutes). La cellule de mesure est ensuite remplie de mercure. La première partie (pressions inférieures à 400 kPa) de la courbe d'intrusion du mercure Vp= f(P), où Vp est le volume d'intrusion du mercure et P la pression appliquée, est déterminée sur le porosimètre PASCAL 140. La cellule de mesure est ensuite installée sur le poste de mesure du porosimètre PASCAL 440, la deuxième partie de la courbe d'intrusion du mercure Vp= f(P) (pressions comprises entre 100 kPa et 400 MPa) étant déterminée sur le porosimètre PASCAL 440. Les porosimètres sont utilisés en mode «PASCAL», de façon à ajuster en permanence la vitesse d'intrusion du mercure en fonction des variations du volume d'intrusion. Le paramètre de vitesse en mode «PASCAL » est fixé à 5. Les rayons de pore Rp sont calculés à partir des valeurs de pression P à l'aide de la relation de Washbum, rappelée ci-après, avec une hypothèse de pores cylindriques, en choisissant un angle de contact θ égal à 140° et une tension superficielle γ égale à 480 dynes/cm.

$$\textbf{Relation de Washbum :} \quad R_p = \frac{-2\gamma\cos\theta}{P}$$

Les volumes poreux Vp sont rapportés à la masse de silice introduite et exprimés en $cm^3/g$. Le signal Vp= f (Rp) est lissé en combinant un filtre logarithmique (paramètre de filtre «smooth dumping factor » F = 0,96) et un filtre à moyenne mobile (paramètre de filtre «number of points to average » f = 20). La distribution de taille de pore est obtenue en calculant la dérivée dVp/dRp de la courbe d'intrusion lissée.

Par définition, l'indice de finesse IF est la valeur de rayon de pore (exprimée en angströms) correspondant au maximum de la distribution de taille de pore dVp/dRp. On note L la largeur à mi-hauteur de la distribution de taille de pore dVp/dRp. La largeur de distribution de taille de pore de l'échantillon est alors caractérisée à l'aide du paramètre L/IF.

I.1.3.2 Volumes poreux :

Les volumes poreux donnés sont mesurés par porosimétrie au mercure. Ils sont exprimés en $cm^3/g$. La préparation de chaque échantillon se fait comme suit : chaque échantillon est préalablement séché pendant 2 heures en étuve à 200 °C, puis placé dans un récipient à essai dans les 5 minutes suivant sa sortie de l'étuve et dégazé sous vide, par exemple à l'aide d'une pompe à tiroirs rotatifs ; les diamètres de pores (porosimètre MICROMERITICS Autopore III 9420) sont calculés par la relation de WASHBURN avec un angle de contact θ égal à 140° et une tension superficielle γ égale à 484 Dynes/cm.

$V_{(d5 - d_{50})}$ représente le volume poreux constitué par les pores de diamètres compris entre d5 et d50, et $V_{(d5-d_{100})}$ représente le volume poreux constitué par les pores de diamètres compris entre d5 et d100, dn étant ici le diamètre de pores pour lequel n% de la surface totale de tous les pores est apporté par les pores de diamètre supérieur à ce diamètre (la surface totale des pores ($S_0$) peut être déterminée à partir de la courbe d'intrusion de mercure).

I.1.3.3 Largeur de distribution poreuse

La largeur de distribution poreuse ldp s'obtient à partir de la courbe de répartition poreuse, comme indiqué à la figure 1, volume de pores (ml/g) en fonction du diamètre de pores (nm) : on relève les coordonnées du point S correspondant à la population principale, à savoir les valeurs du diamètre (nm) $X_S$ et du volume poreux (ml/g) $Y_S$. ; on trace une droite d'équation $Y = Y_S/2$. ; cette droite coupe la courbe de répartition poreuse en deux points A et B ayant pour abscisse (nm) respectivement $X_A$ et $X_B$ de part et d'autre de $X_S$ ; la largeur de distribution poreuse ldp est égale au rapport $(X_A - X_B) / X_S$.

<u>I.1.4 Chimie de surface :</u>

I.1.4.1 nombre de silanols par $nm^2$

Le nombre de silanols par $nm^2$ est déterminé par greffage de méthanol sur la surface de la silice. Dans un premier temps, une quantité d'environ 1 g de silice brute est mise en suspension dans 10 ml de méthanol, dans un autoclave de 110 ml (Top Industrie, Réf : 09990009).
Un barreau aimanté est introduit et le réacteur, fermé hermétiquement et calorifugé, est chauffé à 200°C (40 bars) sur agitateur magnétique chauffant pendant 4 heures. L'autoclave est ensuite refroidi dans un bain d'eau froide. La silice greffée est récupérée par décantation et le méthanol résiduel évaporé sous courant d'azote. Enfin, la silice greffée est séchée à 130°C sous vide pendant 12 heures. La teneur en carbone est déterminée par analyseur élémentaire (analyseur NCS 2500 de CE Instruments) sur la silice brute et sur la silice greffée. Ce dosage de carbone sur la silice greffée doit être effectué dans les 3 jours qui suivent la fin du séchage. En effet, l'humidité de l'air ou la chaleur pourraient provoquer une hydrolyse du greffage méthanol. Le nombre de silanols par $nm^2$ est calculé à l'aide de la formule suivante :

$$N_{SiOH/nm^2} = \frac{(\%_{C_g} - \%_{C_b}) \times 6.023 \times 10^{23}}{S_{spé} \times 10^{18} \times 12 \times 100}$$

$N_{SiOH/nm^2}$ : nombre de silanols par $nm^2$ ($SiOH/nm^2$)
$\%_{Cg}$ : pourcentage massique de carbone présent sur la silice greffée
$\%_{Cb}$ : pourcentage massique de carbone présent sur la silice brute
$S_{spé-}$ : surface spécifique BET de la silice ($m^2/g$)

I.1.4.2 Nombre de Sears

Le nombre de Sears est déterminé selon la méthode décrite par G. W. SEARS dans un article de «Analytical Chemistry, vol. 28, No. 12, décembre 1956 », intitulé « Determination of specific surface area of colloidal silica by titration with sodium hydroxyde ».

Le nombre de Sears est le volume de solution d'hydroxyde de sodium 0,1 M nécessaire pour élever le pH de 4 à 9 d'une suspension de silice à 10 g/l en milieu chlorure de sodium à 200 g/l.

Pour cela, on prépare, à partir de 400 grammes de chlorure de sodium, une solution de chlorure de sodium à 200 g/l acidifiée à pH 3 avec une solution d'acide chlorhydrique 1 M. Les pesées sont effectuées à l'aide d'une balance de précision METTLER. On ajoute délicatement 150 ml de cette solution de chlorure de sodium dans un bécher de 250 ml dans lequel a été préalablement introduit une masse M (en g) de l'échantillon à analyser correspondant à 1,5 grammes de silice sèche. On applique à la dispersion obtenue des ultra-sons pendant 8 minutes (sonde à ultra-sons BRANSON de 1500 W, amplitude de 60 %, diamètre de 13 mm), le bécher étant dans un cristallisoir rempli de glace. Puis on homogénéise la solution obtenue par agitation magnétique, à l'aide d'un barreau aimanté de dimensions 25 mm x 5 mm. On vérifie que le pH de la suspension est inférieur à 4, en l'ajustant si nécessaire avec une solution d'acide chlorhydrique 1 M. On ajoute ensuite, à l'aide d'un pHmètre titreur Metrohm (titroprocesseur 672, dosimat 655), préalablement étalonné à l'aide de solutions tampon pH 7 et pH 4, une solution d'hydroxyde de sodium 0,1 M à un débit de 2 ml/min (Le pHmètre titreur a été programmé comme suit : 1) Appeler le programme «Get pH», 2) Introduire les

paramètres suivants : pause (temps d'attente avant le début du titrage) : 3 s, débit de réactif : 2 ml/min, anticipation (adaptation de la vitesse de titrage à la pente de la courbe de pH) : 30, stop pH : 9,40, EP critique (sensibilité de détection du point d'équivalence) : 3, report (paramètres d'impression du rapport de titrage) : 2,3,5 (c'est-à-dire création d'un rapport détaillé, liste de points de mesure, courbe de titrage)). On détermine par interpolation les volumes $V_1$ et $V_2$ exacts de la solution d'hydroxyde de sodium ajoutée pour obtenir respectivement un pH de 4 et un pH de 9. Le nombre de Sears pour 1,5 grammes de silice sèche est égal à $((V_2 - V_1) \times 150) / (ES \times M)$, avec :

$V_1$ : volume de solution d'hydroxyde de sodium 0,1 M à $pH_1 = 4$
$V_2$ : volume de solution d'hydroxyde de sodium 0,1 M à $pH_2 = 9$
M : masse de l'échantillon (g)
ES : extrait sec en %

<u>I.1.5 Désagglomération :</u>

Dans certains cas, l'aptitude à la dispersion d'une silice, notamment au sein d'une matrice élastomérique, peut être évaluer au moyen de tests spécifiques de désagglomération.

I.1.5.1 Vitesse de désagglomération $\alpha$:

La vitesse de désagglomération notée $\alpha$ est mesurée au moyen d'un test de désagglomération aux ultrasons, à 100% de puissance d'une sonde de 600 W (watts), fonctionnant ici en mode pulsé (soit : 1 seconde ON, 1 seconde OFF) afin d'éviter un échauffement excessif de la sonde ultrasons durant la mesure. Ce test connu, faisant notamment l'objet de la demande de brevet WO99/28376 (voir également WO99/28380, WO00/73372, WO00/73373), permet de mesurer en continu l'évolution de la taille moyenne (en volume) des agglomérats de particules durant une sonification, selon les indications ci-après.

Le montage utilisé est constitué d'un granulomètre laser (type "Mastersizer S", commercialisé par Malvern Instruments - source laser He-Ne émettant dans le rouge, longueur d'onde 632,8 nm) et de son préparateur ("Malvern Small Sample Unit MSX1"), entre lesquels a été intercalée une cellule de traitement en flux continu (Bioblock M72410) munie d'une sonde ultrasons (Sonificateur 1/2 pouce type Vibracell de 600 W commercialisé par la société Bioblock).

Une faible quantité (150 mg) de silice à analyser est introduite dans le préparateur avec 160 ml d'eau, la vitesse de circulation étant fixée à son maximum. Au moins trois mesures consécutives sont réalisées pour déterminer selon la méthode de calcul connue de Fraunhofer (matrice de calcul Malvern 3$$D) le diamètre initial moyen (en volume) des agglomérats, noté $d_v[0]$. La sonification (mode pulsé : 1 s ON, 1 s OFF) est ensuite établie à une puissance de 100% (soit 100% de la position maxi du "tip amplitude") et on suit durant 8 minutes environ l'évolution du diamètre moyen en volume $d_v[t]$ en fonction du temps "t" à raison d'une mesure toutes les 10 secondes environ. Après une période d'induction (environ 3-4 minutes), il est observé que l'inverse du diamètre moyen en volume $1/d_v[t]$ varie linéairement, ou de manière sensiblement linéaire, avec le temps "t" (régime stable de désagglomération). La vitesse de désagglomération $\alpha$ est calculée par régression linéaire de la courbe d'évolution de $1/d_v[t]$ en fonction du temps "t", dans la zone de régime stable de désagglomération (en général, entre 4 et 8 minutes environ). Elle est exprimée en $\mu m^{-1}$/min.

La demande WO99/28376 précitée décrit en détail un dispositif de mesure utilisable pour la réalisation de ce test de désagglomération aux ultrasons. Ce dispositif, on le rappelle, consiste en un circuit fermé dans lequel peut circuler un flux d'agglomérats de particules en suspension dans un liquide. Ce dispositif comporte essentiellement un préparateur d'échantillon, un granulomètre laser et une cellule de traitement. Une mise à la pression atmosphérique, au niveau du préparateur d'échantillon et de la cellule de traitement elle-même, permet l'élimination en continu des bulles d'air qui se forment durant la sonification (action de la sonde ultrasons).

Le préparateur d'échantillon ("Malvern Small Sample Unit MSX1 ") est destiné à recevoir l'échantillon de silice à tester (en suspension dans le liquide) et à le faire circuler à travers le circuit à la vitesse préréglée (potentiomètre - vitesse maximum d'environ 3 l/min), sous la forme d'un flux de suspension liquide. Ce préparateur consiste simplement en une cuve de réception qui contient, et à travers laquelle circule, la suspension à analyser. Il est équipé d'un moteur d'agitation, à vitesse modulable, afin d'éviter une sédimentation des agglomérats de particules de la suspension ; une mini-pompe centrifuge est destinée à assurer la circulation de la suspension dans le circuit ; l'entrée du préparateur est reliée à l'air libre via une ouverture destinée à recevoir l'échantillon de charge à tester et/ou le liquide utilisé pour la suspension.

Au préparateur est connecté un granulomètre laser ("Mastersizer S") dont la fonction est de mesurer en continu, à intervalles de temps réguliers, la taille moyenne en volume "$d_v$" des agglomérats, au passage du flux, grâce à une cellule de mesure à laquelle sont couplés les moyens d'enregistrement et de calcul automatiques du granulomètre. On rappelle ici brièvement que les granulomètres laser exploitent, de manière connue, le principe de la diffraction de la lumière par des objets solides mis en suspension dans un milieu dont l'indice de réfraction est différent de celui du

solide. Selon la théorie de Fraunhofer, il existe une relation entre la taille de l'objet et l'angle de diffraction de la lumière (plus l'objet est petit et plus l'angle de diffraction sera élevé). Pratiquement, il suffit de mesurer la quantité de lumière diffractée pour différents angles de diffraction pour pouvoir déterminer la distribution de taille (en volume) de l'échantillon, $d_v$ correspondant à la taille moyenne en volume de cette distribution ($d_v = \Sigma(n_i\ d_i^4) / \Sigma(n_i\ d_i^3)$ avec $n_i$ nombre d'objets de la classe de taille ou diamètre $d_i$).

Intercalée entre le préparateur et le granulomètre laser se trouve enfin une cellule de traitement équipée d'une sonde ultrasons, pouvant fonctionner en mode continu ou pulsé, destinée à casser en continu les agglomérats de particules au passage du flux. Ce flux est thermostaté par l'intermédiaire d'un circuit de refroidissement disposé, au niveau de la cellule, dans une double enveloppe entourant la sonde, la température étant contrôlée par exemple par une sonde de température plongeant dans le liquide au niveau du préparateur.

I.1.5.2 Diamètre médian et facteur de désagglomération :

L'aptitude à la dispersion (et à la désagglomération) des silices utilisées selon l'invention peut être quantifiée au moyen d'autres tests de désagglomération.

Un autre test de désagglomération est réalisé selon le protocole suivant :

La cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'eau permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 %. La désagglomération est effectuée pendant 420 secondes.

On réalise ensuite la mesure granulométrique après avoir introduit dans la cuve du granulomètre un volume (exprimé en ml) connu de la suspension homogénéisée.

La valeur du diamètre médian $Ø_{50S}$ (ou diamètre médian Sympatec) que l'on obtient est d'autant plus faible que la silice présente une aptitude à la désagglomération élevée. On peut déterminer également le rapport (10 x volume de suspension introduite (en ml))/densité optique de la suspension détectée par le granulomètre (cette densité optique est de l'ordre de 20). Ce rapport est indicatif du taux de particules de taille inférieure à 0,1 $\mu$m qui ne sont pas détectées par le granulomètre. Ce rapport est appelé facteur de désagglomération (Sympatec) aux ultra-sons ($F_{DS}$).

Encore un autre test de désagglomération peut être réalisé selon le protocole suivant:

La cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), utilisé à 80% de la puissance maximale, équipé d'une sonde de diamètre 19 mm. La mesure granulométrique est effectuée par diffraction laser sur un granulomètre MALVERN (Masterizer 2000).

On pèse dans un pilulier (hauteur : 6 cm et diamètre : 4 cm) 1 gramme de silice et l'on complète à 50 grammes par ajout d'eau permutée : on réalise ainsi une suspension aqueuse à 2 % de silice qui est homogénéisée pendant 2 minutes par agitation magnétique. On procède ensuite à la désagglomération sous ultra-sons pendant 420 secondes. On réalise ensuite la mesure granulométrique après avoir introduit dans la cuve du granulomètre la totalité de la suspension homogénéisée.

La valeur du diamètre médian $\varnothing_{50M}$ (ou diamètre médian Malvern) que l'on obtient est d'autant plus faible que la silice présente une aptitude à la désagglomération élevée. On peut déterminer également le rapport (10 x valeur de l'obscuration du laser bleu)/ valeur de l'obscuration du laser rouge. Ce rapport est indicatif du taux de particules de taille inférieure à 0,1 $\mu$m. Ce rapport est appelé facteur de désagglomération (Malvern) aux ultra-sons ($F_{DM}$).

**I.2 Caractérisation des compositions de caoutchouc**

Les compositions de caoutchouc diénique sont caractérisées, avant et après cuisson, comme indiqué ci-après.

I.2.1 Plasticité Mooney :

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une

enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

I.2.2 Bound Rubber :

Le test dit de *"bound rubber"* permet de déterminer la proportion d'élastomère, dans une composition non vulcanisée, qui est associée à la charge renforçante si intimement que cette proportion d'élastomère est insoluble dans les solvants organiques usuels. La connaissance de cette proportion insoluble de caoutchouc, liée à la charge renforçante au cours du mélangeage, donne une indication quantitative de l'activité renforçante de la charge dans la composition de caoutchouc. Une telle méthode a été décrite par exemple dans la norme française NF T 45-114 (juin 1989) appliquée à la détermination du taux d'élastomère lié au noir de carbone.

Ce test, bien connu de l'homme du métier pour caractériser la qualité de renforcement apportée par la charge renforçante, a par exemple été décrit dans les documents suivants: Plastics, Rubber and Composites Processing and Applications, Vol. 25, No7, p. 327 (1996) ; Rubber Chemistry and Technology, Vol. 69, p. 325 (1996).

Dans le cas présent, on mesure le taux d'élastomère non extractible au toluène, après un gonflement pendant 15 jours d'un échantillon de composition de caoutchouc (typiquement 300-350 mg) dans ce solvant (par exemple dans 80-100 $cm^3$ de toluène), suivi d'une étape de séchage de 24 heures à 100°C, sous vide, avant pesée de l'échantillon de composition de caoutchouc ainsi traité. De préférence, l'étape de gonflement ci-dessus est conduite à la température ambiante (environ 20°C) et à l'abri de la lumière, et le solvant (toluène) est changé une fois, par exemple après les cinq premiers jours de gonflement.

Le taux de "bound rubber" (% en poids), noté "BR", est calculé de manière connue par différence entre le poids initial et le poids final de l'échantillon de composition de caoutchouc, après prise en compte et élimination, dans le calcul, de la fraction des composants insolubles par nature, autres que l'élastomère, présents initialement dans la composition de caoutchouc.

I.2.3 Rhéométrie :

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : t; est le délai d'induction, c'est-à-dire le temps nécessaire au début de la réaction de vulcanisation ; $t_\alpha$ (par exemple $t_{90}$) est le temps nécessaire pour atteindre une conversion de a%, c'est-à-dire $\alpha$% (par exemple 90%) de l'écart entre les couples minimum et maximum. On mesure également la constante de vitesse de conversion notée K (exprimée en $min^{-1}$), d'ordre 1, calculée entre 30% et 80% de conversion, qui permet d'apprécier la cinétique de vulcanisation.

I.2.4 Essais de traction :

Ces essais permettent de déterminer les contraintes d'élasticité et les propriétés à la rupture. Sauf indication différente, ils sont effectués conformément à la norme AFNOR NF T 46-002 de septembre 1988.

On mesure en seconde élongation (i.e. après un cycle d'accommodation) les modules sécants nominaux (ou contraintes apparentes, en MPa) à 10% d'allongement (notés MA10), 100% d'allongement (notés MA100) et 300% d'allongement (notés MA300).

Toutes ces mesures de traction sont effectuées dans les conditions normales de température (23$\pm$2°C) et d'hygrométrie (50$\pm$5% d'humidité relative), selon la norme française NF T 40-101 (décembre 1979).

Un traitement des enregistrements de traction permet également de tracer la courbe de module en fonction de l'allongement (voir figure 1 annexée), le module utilisé ici étant le module sécant vrai mesuré en première élongation, calculé en se ramenant à la section réelle de l'éprouvette et non à la section initiale comme précédemment pour les modules nominaux.

I.2.5 Propriétés dynamiques :

Les propriétés dynamiques $\Delta G^*$ et $\tan(\delta)_{max}$ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C) selon la norme ASTM D 1349-99, ou selon les cas à une température différente. On effectue un balayage en amplitude de déformation de 0,1 à 50% (cycle aller),

puis de 50% à 1% (cycle retour). Les résultats exploités sont le module complexe de cisaillement dynamique (G*) et le facteur de perte tan(δ). Pour le cycle retour, on indique la valeur maximale de tan(δ)observée, noté $\tan(\delta)_{max}$, ainsi que l'écart de module complexe (ΔG*) entre les valeurs à 0.15 et 50% de déformation (effet Payne).

I.2.6 Dureté Shore A :

La dureté Shore A des compositions après cuisson est appréciée conformément à la norme ASTM D 2240-86.

**I.3 Caractérisation des pneumatiques ou bandes de roulement**

I.3.1 Résistance au roulement:

La résistance au roulement est mesurée sur un volant, selon la méthode ISO 87-67 (1992). Une valeur supérieure à celle du témoin, arbitrairement fixée à 100, indique un résultat amélioré c'est-à-dire une résistance au roulement plus basse.

I.3.2 Résistance à l'usure:

On soumet les pneumatiques à un roulage réel sur route, sur un véhicule automobile déterminé, jusqu'à ce que l'usure due au roulage atteigne les témoins d'usure disposés dans les rainures de la bande de roulement. Une valeur supérieure à celle du témoin, arbitrairement fixée à 100, indique un résultat amélioré c'est-à-dire un kilométrage parcouru supérieur.

**II CONDITIONS DE REALISATION DE L'INVENTION**

Les compositions de caoutchouc diénique pour les pneumatiques conformes à l'invention sont à base d'au moins :

(i) un élastomère diénique;

(ii) à titre de charge renforçante, une charge inorganique constituée en tout ou partie d'une silice spécifique;

(iii) un agent de couplage assurant la liaison entre la charge inorganique et l'élastomère diénique

Bien entendu, par l'expression composition "à base de", il faut entendre une composition comportant le mélange et/ou le produit de réaction *in situ* des différents constituants utilisés, certains de ces constituants de base étant susceptibles de, ou destinés à réagir entre eux, au moins en partie, lors des différentes phases de fabrication des bandes de roulement et pneumatiques, en particulier au cours de leur vulcanisation.

II.1 **Elastomère diénique**

Par élastomère (ou caoutchouc) "diénique", on entend de manière connue un élastomère issu au moins en partie (i.e., un homopolymère ou un copolymère) de monomères diènes c'est-à-dire de monomères porteurs de deux doubles liaisons carbone-carbone, conjuguées ou non.

Par élastomère diénique "essentiellement insaturé", on entend ici un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions générales étant données, l'homme du métier du pneumatique comprendra que la présente invention est en premier lieu mise en oeuvre avec des élastomères diéniques fortement insaturés, en particulier avec :

(a) - tout homopolymère obtenu par polymérisation d'un monomère diène conjugué ayant de 4 à 12 atomes de

carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention, en particulier lorsque la composition de caoutchouc est destinée à la bande de roulement du pneumatique de l'invention, est en premier lieu mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di-alkyl($C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, micro séquencés, et être préparés en dispersion ou en solution ; ils peuvent être couplés et/ou étoilés ou encore fonctionnalisés avec un agent de couplage et/ou d'étoilage ou de fonctionnalisation.

L'élastomère diénique de la bande de roulement du pneumatique conforme à l'invention est de préférence constitué, en tout ou partie, plus préférentiellement à raison d'au moins 50 pce, par un élastomère fortement insaturé du type butadiénique, c'est-à-dire choisi dans le groupe des élastomères diéniques fortement insaturés constitué par les polybutadiènes (BR), les copolymères de butadiène et les mélanges de ces élastomères. Ces copolymères de butadiène sont notamment les copolymères de butadiène-styrène (SBR), les copolymères d'isoprène-butadiène (BIR), les copolymères d'isoprène-butadiène-styrène (SBIR).

A titre de d'élastomères butadiéniques préférentiels conviennent notamment les BR ayant une teneur en unités -1,2 comprise entre 4% et 80% ou ceux ayant une teneur en cis-1,4 supérieure à 80%, les SBR ayant une teneur en styrène comprise entre 5% et 50% en poids et plus particulièrement entre 20% et 40%, une teneur en liaisons - 1,2 de la partie butadiénique comprise entre 4% et 65% , une teneur en liaisons trans-1,4 comprise entre 20% et 80%, les BIR ayant une teneur en isoprène comprise entre 5% et 90% en poids et une température de transition vitreuse ("Tg" mesurée selon norme ASTM D3418-82) de -40°C à -80°C. Dans le cas des copolymères SBIR conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités - 1,2 plus -3,4 de la partie isoprénique comprise entre 5% et 70% et une teneur en unités trans -1,4 de la partie isoprénique comprise entre 10% et 50%, et plus généralement tout SBIR ayant une Tg comprise entre -20°C et -70°C.

En résumé, de manière particulièrement préférentielle, l'élastomère diénique de la composition pour le pneumatique conforme à l'invention est choisi dans le groupe des élastomères diéniques fortement insaturés constitué par les polybutadiènes (BR), les polyisoprènes (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition pour le pneumatique conforme à l'invention est particulièrement destinée à une bande de roulement pour pneumatique, qu'il s'agisse d'un pneumatique neuf ou usagé (rechapage).

L'élastomère butadiénique est particulièrement choisi parmi les BR, les SBR et les mélanges de ces élastomères.

De préférence, dans le cas d'une composition de caoutchouc pour pneumatique pour véhicule tourisme, l'élastomère butadiénique est majoritairement un élastomère SBR, qu'il s'agisse d'un SBR préparé en émulsion ("ESBR") ou d'un SBR préparé en solution ("SSBR"), ou un mélange de SBR et d'un autre élastomère diénique, notamment butadiénique, par exemple d'un coupage de SBR et BR, de SBR et NR (caoutchouc naturel), de SBR et IR (polyisoprène de synthèse).

On utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C. Un tel copolymère SBR, de préférence un SSBR, est éventuellement utilisé en mélange avec BR possédant de préférence plus de 90% de liaisons cis-1,4.

Dans le cas d'un pneumatique pour véhicule utilitaire, notamment pour véhicule "Poids lourd" - i.e., métro, bus, engins de transport routier (camions, tracteurs, remorques), véhicules hors-la-route -, le composant diénique est par exemple choisi dans le groupe constitué par le caoutchouc naturel, les polyisoprènes de synthèse, les copolymères d'isoprène (isoprène-butadiène, isoprène-styrène, butadiène-styrène-isoprène) et les mélanges de ces élastomères. Dans un tel cas, le composant diénique peut être aussi constitué, en tout ou partie, d'un autre élastomère fortement insaturé tel que, par exemple, un élastomère SBR.

Selon un autre mode de réalisation avantageux de l'invention, notamment lorsqu'elle est destinée à un flanc de pneumatique, la composition peut contenir au moins un élastomère diénique essentiellement saturé, en particulier au moins un copolymère EPDM, que ce copolymère soit par exemple utilisé ou non en mélange avec un ou plusieurs des élastomères diéniques fortement insaturés cités précédemment.

Les compositions de caoutchouc diénique pour le pneumatique de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II.2 Charge inorganique renforçante

On rappelle que par "charge inorganique renforçante", doit être entendu de manière connue une charge inorganique ou minérale, quelles que soient sa couleur et son origine (naturelle ou de synthèse), encore appelée charge "blanche" ou parfois charge "claire" par opposition au noir de carbone, capable de renforcer à elle seule, sans autre moyen qu'un agent de couplage intermédiaire, une composition de caoutchouc diénique destinée à la fabrication de pneumatiques, en d'autres termes apte à remplacer, dans sa fonction de renforcement, une charge conventionnelle de noir de carbone de grade pneumatique.

La composition de caoutchouc diénique pour pneumatique (c'est à dire destinée à la fabrication de pneumatiques ou de produits semi-finis en caoutchouc destinés à la réalisation de ces pneumatiques) a pour caractéristique essentielle, selon un premier aspect de l'invention, d'être renforcée par une charge inorganique renforçante comportant, de préférence à titre majoritaire, une silice spécifique susceptible d'être obtenue selon un procédé comprenant la réaction d'un silicate avec un agent acidifiant ce par quoi l'on obtient une suspension de silice, puis la séparation et le séchage de cette suspension.

Ce procédé est caractérisé en ce que la réaction du silicate avec l'agent acidifiant est réalisée selon les étapes successives suivantes :

($\alpha$) on forme un pied de cuve aqueux présentant un pH compris entre 2 et 5,

($\beta$) on ajoute audit pied de cuve, simultanément, du silicate et de l'agent acidifiant, de telle manière que le pH du milieu réactionnel soit maintenu entre 2 et 5,

($\gamma$) on arrête l'addition de l'agent acidifiant tout en continuant l'addition de silicate dans le milieu réactionnel jusqu'à l'obtention d'une valeur du pH du milieu réactionnel comprise entre 7 et 10,

($\delta$) on ajoute au milieu réactionnel, simultanément, du silicate et de l'agent acidifiant, de telle manière que le pH du milieu réactionnel soit maintenu entre 7 et 10,

($\varepsilon$) on arrête l'addition du silicate tout en continuant l'addition de l'agent acidifiant dans le milieu réactionnel jusqu'à l'obtention d'une valeur du pH du milieu réactionnel inférieure à 6.

Le choix de l'agent acidifiant et du silicate se fait d'une manière bien connue en soi.

On utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre

40 et 180 g/l, par exemple entre 60 et 130 g/l.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration (exprimée en $SiO_2$) comprise entre 40 et 330 g/l, par exemple entre 60 et 300 g/l, en particulier entre 60 et 260 g/l.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral $SiO_2/Na_2O$ compris entre 2,5 et 4, par exemple entre 3,2 et 3,8.

En ce qui concerne plus particulièrement le procédé de préparation, la réaction du silicate avec l'agent acidifiant se fait d'une manière très spécifique selon les étapes suivantes.

On forme tout d'abord un pied de cuve aqueux présentant un pH compris entre 2 et 5.

De préférence, le pied de cuve formé présente un pH compris entre 2,5 et 5, notamment entre 3 et 4,5 ; ce pH est par exemple compris entre 3,5 et 4,5.

Ce pied de cuve initial peut être obtenu par ajout d'agent acidifiant à de l'eau de manière à obtenir une valeur de pH du pied de cuve entre 2 et 5, de préférence entre 2,5 et 5, notamment entre 3 et 4,5 et par exemple entre 3,5 et 4,5.

Il peut être également obtenu par ajout d'agent acidifiant à un mélange eau + silicate de manière à obtenir cette valeur de pH.

Il peut aussi être préparé par ajout d'agent acidifiant à un pied de cuve contenant des particules de silice préalablement formées à un pH inférieur à 7, de manière à obtenir une valeur de pH entre 2 et 5, de préférence entre 2,5 et 5, notamment entre 3 et 4,5 et par exemple entre 3,5 et 4,5.

Le pied de cuve formé dans l'étape ($\alpha$) peut éventuellement comprendre un électrolyte. Néanmoins, de préférence, aucun électrolyte n'est ajouté au cours du procédé de préparation, en particulier dans l'étape ($\alpha$).

Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

La deuxième étape (étape ($\beta$)) consiste en une addition simultanée d'agent acidifiant et de silicate, de telle manière (en particulier à des débits tels) que le pH du milieu réactionnel soit maintenu entre 2 et 5, de préférence entre 2,5 et 5, notamment entre 3 et 4,5, par exemple entre 3,5 et 4,5.

Cette addition simultanée est avantageusement réalisée de manière telle que la valeur du pH du milieu réactionnel soit constamment égale (à $\pm$ 0,2 près) à celle atteinte à l'issue de l'étape initiale ($\alpha$).

Puis, dans une étape ($\gamma$), on arrête l'addition de l'agent acidifiant tout en continuant l'addition de silicate dans le milieu réactionnel de manière à obtenir une valeur du pH du milieu réactionnel comprise entre 7 et 10, de préférence entre 7,5 et 9,5.

Il peut alors être avantageux d'effectuer juste après cette étape ($\gamma$) et donc juste après l'arrêt de l'addition de silicate, un mûrissement du milieu réactionnel, notamment au pH obtenu à l'issue de l'étape ($\gamma$), et en général sous agitation ; ce mûrissement peut par exemple durer de 2 à 45 minutes, en particulier de 5 à 25 minutes et ne comporte préférentiellement ni addition d'agent acidifiant, ni addition de silicate.

Après l'étape ($\gamma$) et l'éventuel mûrissement, on procède à une nouvelle addition simultanée d'agent acidifiant et de silicate, de telle manière (en particulier à des débits tels) que le pH du milieu réactionnel soit maintenu entre 7 et 10, de préférence entre 7,5 et 9,5.

Cette seconde addition simultanée (étape ($\delta$)) est avantageusement réalisée de manière telle que la valeur du pH du milieu réactionnel soit constamment égale (à $\pm$ 0,2 près) à celle atteinte à l'issue de l'étape précédente.

Il est à noter que l'on peut, entre l'étape ($\gamma$) et l'étape ($\delta$), par exemple entre, d'une part, l'éventuel mûrissement suivant l'étape ($\gamma$), et, d'autre part, l'étape ($\delta$), ajouter au milieu réactionnel de l'agent acidifiant, le pH du milieu réactionnel à l'issue de cette addition d'agent acidifiant étant cependant compris entre 7 et 9,5, de préférence entre 7,5 et 9,5.

Enfin, dans une étape ($\varepsilon$), on arrête l'addition du silicate tout en continuant l'addition d'agent acidifiant dans le milieu réactionnel de manière à obtenir une valeur du pH du milieu réactionnel inférieure à 6, de préférence comprise entre 3 et 5,5, en particulier entre 3 et 5, par exemple entre 3 et 4,5.

Il peut alors être avantageux d'effectuer après cette étape ($\varepsilon$) et donc juste après l'arrêt de l'addition d'agent acidifiant, un mûrissement du milieu réactionnel, notamment au pH obtenu à l'issue de l'étape ($\varepsilon$), et en général sous agitation ; ce mûrissement peut par exemple durer de 2 à 45 minutes, en particulier de 5 à 20 minutes et ne comporte préférentiellement ni addition d'agent acidifiant, ni addition de silicate.

L'enceinte réactionnelle dans laquelle est mis en oeuvre l'ensemble de la réaction du silicate avec l'agent acidifiant est habituellement muni d'un équipement d'agitation et d'un équipement de chauffage adéquats.

L'ensemble de la réaction du silicate avec l'agent acidifiant est généralement réalisé entre 70 et 95°C, en particulier entre 75 et 90 °C.

Selon une variante, l'ensemble de la réaction du silicate avec l'agent acidifiant est effectué à une température constante, habituellement comprise entre 70 et 95°C, en particulier entre 75 et 90 °C.

Selon une autre variante, la température de fin de réaction est plus élevée que la température de début de réaction : ainsi, on maintient la température au début de la réaction (par exemple au cours des étapes ($\alpha$) à ($\gamma$)) de préférence entre 70 et 85 °C, puis on augmente la température, de préférence jusqu'à une valeur comprise entre 85 et 95 °C, valeur à laquelle elle est maintenue (par exemple au cours des étapes ($\delta$) et ($\varepsilon$), jusqu'à la fin de la réaction.

On obtient, à l'issue des étapes qui viennent d'être décrites, une bouillie de silice qui est ensuite séparée (séparation liquide-solide).

La séparation mise en oeuvre dans ce procédé de préparation comprend habituellement une filtration, suivie d'un lavage si nécessaire. La filtration s'effectue selon toute méthode convenable, par exemple au moyen d'un filtre presse, d'un filtre à bande ou d'un filtre sous vide.

La suspension de silice ainsi récupérée (gâteau de filtration) est ensuite séchée.

Ce séchage peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée mécaniquement, par passage du gâteau dans un broyeur de type colloïdal ou à bille. Le délitage est généralement effectué en présence d'un composé de l'aluminium, en particulier d'aluminate de sodium et, éventuellement, en présence d'un agent acidifiant tel que décrit précédemment (dans ce dernier cas, le composé de l'aluminium et l'agent acidifiant sont généralement ajoutés de manière simultanée). L'opération de délitage permet notamment d'abaisser la viscosité de la suspension à sécher ultérieurement.

Lorsque le séchage est effectué à l'aide d'un atomiseur à buses, la silice susceptible d'être alors obtenue se présente habituellement sous forme de billes sensiblement sphériques.

A l'issue du séchage, on peut alors procéder à une étape de broyage sur le produit récupéré. La silice qui est alors susceptible d'être obtenue se présente généralement sous forme d'une poudre.

Lorsque le séchage est effectué à l'aide d'un atomiseur à turbines, la silice susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel qu'eau, suspension de silice...), une extrusion ou, de préférence, un compactage à sec. Lorsque l'on met en oeuvre cette dernière technique, il peut s'avérer opportun, avant de procéder au compactage, de désaérer (opération appelée également prédensification ou dégazage) les produits pulvérulents de manière à éliminer l'air inclus dans ceux-ci et assurer un compactage plus régulier.

La silice susceptible d'être alors obtenue par cette étape d'agglomération se présente généralement sous la forme de granulés.

Les poudres, de même que les billes, de silice obtenue par le procédé décrit plus haut offrent ainsi l'avantage, entre autre, d'accéder de manière simple, efficace et économique, à des granulés, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en oeuvre des poudres classiques.

Ce procédé de préparation permet d'obtenir des silices précipitées, qui, d'une part, sont non friables, ce qui est avantageux du point de vue de la manipulation et du transport des produits sur les installations industrielles, et, d'autre part, présentent généralement une aptitude satisfaisante à la dispersion (dispersibilité) dans les polymères, confèrent à ceux-ci un compromis de propriétés très satisfaisant, en particulier au niveau de leurs propriétés rhéologiques et dynamiques, et possèdent un bon effet de renforcement.

Les silices obtenues selon ce procédé original peuvent avantageusement être mises en oeuvre comme charges renforçantes dans des compositions de caoutchouc diénique destinées à la fabrication de pneumatiques. Elles confèrent à celles-ci des propriétés dynamiques très satisfaisantes, sans pénaliser les propriétés rhéologiques.

Elles présentent alors avantageusement une surface spécifique BET comprise entre 45 et 400, de préférence entre 80 et 300 $m^2/g$, une surface spécifique CTAB comprise entre 40 et 380, de préférence entre 70 et 280 $m^2/g$, et une taille moyenne (en masse) de particules, notée $d_w$, allant de 20 à 300 nm.

Plus particulièrement, les silices obtenues selon ce procédé original et présentant une surface spécifique BET comprise entre 130 et 300, une surface spécifique CTAB comprise entre 120 et 280 et une taille moyenne (en masse)

de particules, notée $d_w$, allant de 20 à 300 nm, peuvent avantageusement être mises en oeuvre comme charges renforçantes dans des compositions de caoutchouc diénique notamment destinées à la fabrication de bandes de roulement pour pneumatiques. En effet, elles induisent une amélioration significative du compromis des performances pneumatiques.

La composition de caoutchouc diénique du pneumatique conforme à l'invention a pour caractéristique essentielle d'être renforcée par une charge inorganique renforçante comportant, de préférence à titre majoritaire, une silice spécifique qui présente les caractéristiques suivantes :

(a) une surface spécifique BET entre 45 et 400 et de préférence entre 50 et 300 $m^2/g$ ;
(b) une surface spécifique CTAB entre 40 et 380 et de préférence entre 45 et 280 $m^2/g$;
(c) une taille moyenne (en masse) de particules, notée $d_w$, de 20 à 300 nm;
(d) une distribution de taille de particules telle que

$$dw \geq (16\,500 / CTAB) - 30 \;;$$

(e) une porosité vérifiant le critère

$$L / IF \geq -0{,}0025\ CTAB + 0{,}85 \;;$$

(f) un taux de silanols par unité de surface, noté $N_{SiOH/nm^2}$,

$$N_{SiOH/nm^2} \leq -0{,}027\ CTAB + 10{,}5.$$

Par exemple, la silice spécifique mise en oeuvre dans les compositions des pneumatiques conformes à l'invention présente une taille moyenne de particules, notée $d_w$, allant de 40 à 150 nm.

L'invention propose encore de définir cet autre aspect de l'invention selon les variantes qui suivent.

Selon une première variante de définition de cet autre aspect de l'invention, la composition de caoutchouc diénique du pneumatique (c'est à dire destinée à la fabrication de pneumatiques ou de produits semi-finis en caoutchouc destinés à la réalisation de ces pneumatiques) conforme à l'invention est renforcée par une charge inorganique renforçante comportant, de préférence à titre majoritaire, une nouvelle silice caractérisée en ce qu'elle possède, outre les caractéristiques a) à f) précédemment décrites, au moins l'une des caractéristiques suivantes et plus particulièrement les deux :

(h) une largeur Ld ((d84 - d16)/d50) de distribution de taille d'objets mesurée par granulométrie XDC après désagglomération aux ultrasons d'au moins 0,91, en particulier d'au moins 0,94, et
(i) une répartition du volume poreux en fonction de la taille des pores telle que le rapport $V_{(d5 - d50)}/V_{(d5 - d100)}$ est d'au moins 0,66, en particulier d'au moins 0,68.

La silice selon cette variante possède par exemple:

(h) une largeur Ld ((d84 - d16)/d50) de distribution de taille d'objets mesurée par granulométrie XDC après désagglomération aux ultra-sons d'au moins 1,04 et
(i) une répartition du volume poreux en fonction de la taille des pores telle que le rapport $V_{(d5- d50)}/V_{(d5 - d100)}$ est d'au moins 0,71.

Cette silice peut présenter un rapport $V_{(d5 - d50)}/V_{(d5 - d100)}$ d'au moins 0,73, en particulier d'au moins 0,74. Ce rapport peut être d'au moins 0,78, notamment d'au moins 0,80, voire d'au moins 0,84.

Une autre variante de définition de cet autre aspect de l'invention consiste en une composition de caoutchouc diénique du pneumatique de l'invention renforcée par une charge inorganique renforçante comportant, de préférence à titre majoritaire, une nouvelle silice caractérisée en ce qu'elle possède, outre les caractéristiques a) à f) précédemment décrites, au moins une largeur de distribution poreuse 1dp supérieure) à 0,70, en particulier supérieure à 0,80, notamment supérieure à 0,85.

Cette silice peut présenter une largeur de distribution poreuse 1dp supérieure à 1,05, par exemple à 1,25, voire

à 1,40.

La silice selon cette variante possède de préférence une largeur Ld ((d84 - d16)/d50) de distribution de taille d'objets mesurée par granulométrie XDC après désagglomération aux ultra-sons d'au moins 0,91, en particulier d'au moins 0,94, par exemple d'au moins 1,0.

Encore une autre variante de définition de cet autre aspect de l'invention consiste en une composition de caoutchouc diénique du pneumatique selon l'invention (c'est à dire destinée à la fabrication de pneumatiques ou de produits semi-finis en caoutchouc destinés à la réalisation de ce pneumatique renforcée par une charge inorganique renforçante comportant, de préférence à titre majoritaire, une nouvelle silice caractérisée en ce qu'elle possède, outre les caractéristiques a) à f) précédemment décrites, au moins l'une des caractéristiques suivantes et plus particulièrement les deux:

(h) une largeur L'd ((d84 - d16)/d50) de distribution de taille d'objets inférieure à 500 nm, mesurée par granulométrie XDC après désagglomération aux ultrasons, d'au moins 0,95 et

(i) une répartition du volume poreux en fonction de la taille des pores telle que le rapport $V_{(d5- d50)}/V_{(d5-d100)}$ est d'au moins 0,71.

Cette silice peut présenter une répartition du volume poreux en fonction de la taille des pores telle que le rapport $V(_{d5 - d50)}/V_{(d5 - d100)}$ d'au moins 0,73, en particulier d'au moins 0,74. Ce rapport peut être d'au moins 0,78, notamment d'au moins0,80, voire d'au moins 0,84.

Une autre variante de définition de cet autre aspect de l'invention, consiste en une composition de caoutchouc diénique du pneumatique conforme à l'invention renforcée par une charge inorganique renforçante comportant, de préférence à titre majoritaire, une nouvelle silice caractérisée en ce qu'elle possède outre les caractéristiques a) à f) précédemment décrites, au moins l'une des caractéristiques suivantes et plus particulièrement les deux:

(h) une largeur L'd ((d84 - d16)/d50) de distribution de taille d'objets inférieure . à 500 nm, mesurée par granulométrie XDC après désagglomération aux ultrasons, d'au moins 0,90, en particulier d'au moins 0.92, et

(i) une répartition du volume poreux en fonction de la taille des pores telle que le rapport $V_{(d5 - d50)}/V_{(d5 - d100)}$ est d'au moins 0,74.

Cette silice peut présenter un rapport $V_{(d5 -d50)}/V_{(d5 - d100)}$ d'au moins 0,78, notamment d'au moins 0,80, voire d'au moins 0,84.

Les silices selon ces variantes peuvent présenter à la fois une largeur Ld de distribution de taille d'objets d'au moins 1,04 et une largeur L'd de distribution de taille d'objets (inférieure à 500 nm) d'au moins 0,95. La largeur Ld de distribution de taille d'objets des silices est généralement d'au moins 1,10, en particulier d'au moins 1,20. Elle peut être d'au moins 1,30, par exemple d'au moins 1,50, voire d'au moins 1,60. La largeur L'd de distribution de taille d'objets (inférieure à 500 nm) des silices peut être d'au moins 1,0, en particulier d'au moins 1,10, notamment d'au moins 1,20.

Les silices utilisées dans les compositions de caoutchouc diénique pour pneumatiques conformes à l'invention peuvent présenter un rapport ((Nombre de Sears x 100) / surface spécifique BET ($S_{BET}$)) inférieur à 60, de préférence inférieur à 55.

Les silices utilisées dans les compositions de caoutchouc diénique pour pneumatiques, peuvent présenter une taille d'objets élevée et donc atypique, qui est telle que le mode de leur distribution granulométrique mesuré par granulométrie XDC après désagglomération aux ultra-sons (dans l'eau) réponde à la condition : Mode XDC (nm) ≥ (5320 / SCTAB (m2/g)) + 8, de préférence à la condition : Mode XDC (mn) ≥ (5320 / SCTAB (m2/g)) + 10.

Les silices utilisées dans les compositions de caoutchouc diénique pour pneumatiques selon les variantes de l'invention peuvent posséder par exemple un volume poreux (V80) constitué par les pores de diamètres compris entre 3,7 et 80 nm d'au moins 1,35 cm3/g, en particulier d'au moins 1,40 cm3/g ; voire d'au moins 1,50 cm3/g.

Dans les silices utilisées conformément à l'invention, le volume poreux apporté par les pores les plus gros représente la plus grande partie de sa structure.

Les silices utilisées dans les compositions de caoutchouc diénique pour pneumatiques conformes à l'invention présentent de préférence une aptitude satisfaisante à la dispersion dans les matrices d'élastomères diéniques.

Avantageusement, les silices utilisées dans les compositions de caoutchouc diénique pour pneumatiques selon l'invention, présentent une vitesse de désagglomération notée $\alpha$, mesurée au moyen d'un test de désagglomération aux ultrasons, à 100% de puissance d'une sonde de 600 W (watts), fonctionnant en mode pulsé (1 s ON, 1 s OFF), supérieure ou égale à 0,0035 $\mu m^{-1}$/min, par exemple d'au moins 0,0037 $\mu m^{-1}$/min (caractéristique notée (g)).

Leur diamètre médian ($Ø_{50S}$), après désagglomération aux ultra-sons, peut être inférieur à 8,5 $\mu$m; il peut être inférieur à 6,0 $\mu$m, par exemple inférieur à 5,5 $\mu$m.

De même, leur diamètre médian ($Ø_{50M}$), après désagglomération aux ultra-sons, peut être inférieur à 8,5 $\mu$m; il peut être inférieur à 6,0 $\mu$m, par exemple inférieur à 5,5 $\mu$m.

Les silices utilisées selon l'invention peuvent présenter un facteur de désagglomération aux ultra-sons ($F_{DS}$) supérieur à 3 ml., en particulier supérieur à 3,5 ml, notamment supérieur à 4,5 ml.

Leur facteur de désagglomération aux ultra-sons ($F_{DM}$) peut être supérieur à 6, en particulier supérieur à 7, notamment supérieur à 11.

Les silices utilisées comme charge renforçantes selon l'invention peuvent présenter une certaine microporosité ; ainsi, les silices utilisées selon l'invention sont habituellement telles que ($S_{BET}$ - $S_{CTAB}$) ≥ 5 $m^2$/g, de préférence ≥ 15 $m^2$/g, par exemple ≥ 25 $m^2$/g.

Cette microporosité n'est pas en général trop importante ; les silices utilisées selon l'invention sont généralement telles que ($S_{BET}$ - $S_{CTAB}$) < 50 $m^2$/g, de préférence < 40 $m^2$/g.

Le pH (mesuré selon la norme ISO 787/9 (pH d'une suspension à 5 % dans l'eau))des silices selon l'invention peut être compris entre 6,3 et 7,8, notamment entre 6,6 et 7,5.

Elles peuvent posséder une prise d'huile DOP (déterminée selon la norme NF T 30-022 (mars 1953) en mettant en oeuvre le dioctylphtalate) variant, le plus souvent, entre 220 et 330 ml/100g, par exemple entre 240 et 300 ml/100g.

De telles silices, utilisables comme charges renforçantes dans des compositions sont susceptibles d'être préparées selon le procédé de préparation original décrit plus haut.

Parmi ces nouvelles silices, il s'avère que les silices à surface spécifique élevée, utilisées comme charge renforçantes dans les compositions pour pneumatique selon l'invention, conduisent à des niveaux de renforcement et à une dispersibilité surprenants et inattendus pour de telles surfaces, particulièrement lorsque ces compositions sont utilisées dans des bandes de roulement de pneumatique tourisme. Ces compositions de caoutchouc permettent alors d'atteindre des compromis de performances pneumatiques significativement améliorés.

Aussi les silices utilisées selon l'invention présentent-elles de préférence : une surface BET comprise entre 130 et 300 $m^2$/g et une surface CTAB comprise entre 120 et 280 $m^2$/g. Par exemple, ces silices présentent : une surface BET comprise entre 150 et 280 $m^2$/g et une surface CTAB comprise entre 145 et 260 $m^2$/g.

L'état physique sous lequel peuvent se présenter les silices spécifiques renforçantes est indifférent, que ce soit sous forme de poudre, de micro perles, de granulés, de pellets, de billes ou toute autre forme densifiée, à la condition bien évidemment que le mode de densification n'altère pas les caractéristiques essentielles ou préférentielles préconisées pour ces charges.

A titre d'exemple, elles peuvent se présenter sous forme de billes sensiblement sphériques de taille moyenne d'au moins 80 μm.

Cette taille moyenne des billes peut être d'au moins 100 μm, par exemple d'au moins 150 μm ; elle est généralement d'au plus 300 μm et se situe de préférence entre 100 et 270 μm. Cette taille moyenne est déterminée selon la norme NF X 11507 (décembre 1970) par tamisage à sec et détermination du diamètre correspondant à un refus cumulé de 50 %.

Ou encore, les silices utilisables comme charges renforçantes dans les compositions des pneumatiques selon l'invention peuvent également se présenter sous forme de poudre de taille moyenne d'au moins 15 μm ; celle-ci est par exemple comprise entre 15 et 60 μm (notamment entre 20 et 45 μm) ou entre 30 et 150 μm (notamment entre 45 et 120 μm).

Elles peuvent aussi se présenter sous forme de granulés de taille d'au moins 1 mm, en particulier comprise entre 1 et 10 mm, selon l'axe de leur plus grande dimension (longueur).

Les silices, préparées selon le procédé de préparation décrit plus haut et/ou présentant les caractéristiques décrites ci-dessus, confèrent, notamment aux bandes de roulement des pneumatiques selon l'invention les contenant, un compromis de propriétés particulièrement intéressant du point de vue de la performance pneumatique. Ainsi, on constate une amélioration significative surprenante de la résistance à l'usure et une diminution tout aussi inattendue de la résistance au roulement des bandes de roulement pour pneumatiques selon l'invention.

La silice ci-dessus peut avantageusement constituer la totalité de la charge inorganique renforçante.

Mais, à cette silice peut être éventuellement associée au moins une autre charge inorganique renforçante conventionnelle. Dans un tel cas, la silice utilisée selon l'invention constitue de préférence au moins 50% en poids de la charge inorganique renforçante totale, plus préférentiellement encore plus de 80% en poids de cette charge inorganique renforçante totale.

A titre d'exemple de charge inorganique renforçante conventionnelle utilisable le cas échéant en complément, on citera notamment des silices hautement dispersibles telles que les silices BV3380 et Ultrasil 7000 de la société Degussa, les silices Zeosil 1165MP et 1115MP de la société Rhodia, la silice Hi-Sil 2000 de la société PPG, les silices Zeopol 8715 ou 8745 de la Société Huber, des silices précipitées traitées telles que par exemple les silices "dopées" à l'aluminium décrites dans la demande EP-A-0735088 précitée, ou encore des alumines renforçantes hautement dispersibles telle que décrites dans la demande EP-A-0810258, par exemple des alumines A125 ou CR125 de la société Baïkowski.

L'homme du métier comprendra que, à titre de charge équivalente d'une telle charge inorganique renforçante complémentaire, pourrait être utilisée une charge renforçante du type organique, notamment un noir de carbone pour

pneumatique, recouvert au moins en partie d'une couche inorganique, notamment de silice, nécessitant quant à elle l'utilisation d'un agent de couplage pour assurer la liaison avec l'élastomère.

A la silice peut être également associé un noir de carbone conventionnel de grade pneumatique, notamment les noirs du type HAF, ISAF, SAF conventionnellement utilisés dans les bandes de roulement des pneumatiques (par exemple, noirs N115, N134, N234, N339, N347, N375). Ce noir de carbone est alors préférentiellement utilisé en faible proportion, à un taux compris de préférence entre 2 et 20 pce, plus préférentiellement dans un domaine de 5 à 15 pce. Dans les intervalles indiqués, on bénéficie des propriétés colorantes (agent de pigmentation noire) et anti-UV des noirs de carbone, sans pénaliser par ailleurs les performances typiques apportées par la silice.

De manière préférentielle, le taux de charge renforçante totale (charge inorganique renforçante plus noir de carbone le cas échéant) est compris dans un domaine allant de 20 à 300 pce, plus préférentiellement de 30 à 150 pce, encore plus préférentiellement de 50 à 130 pce (parties en poids pour cent d'élastomère), l'optimum étant différent selon la nature de la charge inorganique renforçante utilisée et selon les applications visées : le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour les bandes de roulement de pneumatiques aptes à rouler à grande vitesse, la quantité de silice préparée selon le procédé de préparation décrit plus haut et/ou présentant les caractéristiques décrites ci-dessus, est de préférence comprise entre 30 et 120 pce, plus préférentiellement comprise entre 40 et 100 pce.

## II.3 Agent de couplage

On rappelle ici que par "agent de couplage" (charge inorganique/élastomère) on doit entendre, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-T-X", dans laquelle:

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- T représente un groupe organique divalent permettant de relier Y et X.

On rappelle que les agents de couplage ne doivent pas être confondus avec de simples agents de recouvrement de la charge inorganique qui, de manière connue, peuvent comporter la fonction "Y" active vis-à-vis de la charge inorganique mais sont dépourvus de la fonction "X" active vis-à-vis de l'élastomère diénique.

Des agents de couplage (silice/élastomère diénique), d'efficacité variable, ont été décrits dans un très grand nombre de documents et sont bien connus de l'homme du métier. On peut utiliser tout agent de couplage connu susceptible d'assurer efficacement, dans les compositions de caoutchouc diénique utilisables pour la fabrication de bandes de roulement de pneumatiques, la liaison entre une charge inorganique renforçante telle que silice et un élastomère diénique, en particulier des organosilanes ou des polyorganosiloxanes polyfonctionnels porteurs des fonctions X et Y ci-dessus.

On utilise notamment des silanes polysulfurés, dits "symétriques" ou "asymétriques" selon leur structure particulière, tels que décrits par exemple dans les brevets ou demandes de brevet FR 2 149 339, FR 2 206 330, US 3 842 111, US 3 873 489, US 3 978 103, US 3 997 581, US 4 002 594, US 4 072 701, US 4 129 585, US 5 580 919, US 5 583 245, US 5 650 457, US 5 663 358, US 5 663 395, US 5 663 396, US 5 674 932, US 5 675 014, US 5 684 171, US 5 684 172, US 5 696 197, US 5 708 053, US 5 892 085, EP 1 043 357.

Conviennent en particulier pour la mise en oeuvre de l'invention, sans que la définition ci-après soit limitative, des silanes polysulfurés symétriques répondant à la formule générale suivante:

$Z - A - S_n - A - Z$, dans laquelle:

- n vaut de 2 à 8;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$ en particulier le propylène);
- Z répond à l'une des formules ci-après:

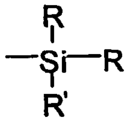 ; 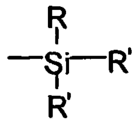 ; 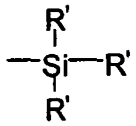 ,

dans lesquelles:

- les radicaux R, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).

- les radicaux R', substitués ou non substitués, identiques ou différents entre eux, représentent un groupe hydroxyle, alkoxyle en $C_1$-$C_{18}$ ou cycloalkoxyle en $C_5$-$C_{18}$ (de préférence un groupe choisi parmi hydroxyle, alkoxyle en $C_1$-$C_8$ et cycloalkoxyle en $C_5$-$C_8$, plus préférentiellement encore un groupe choisi parmi hydroxyle et alkoxyle en $C_1$-$C_4$, en particulier méthoxyle et éthoxyle).

Dans le cas d'un mélange de silanes polysulfurés répondant à la formule (I) ci-dessus, notamment des mélanges usuels disponibles commercialement, on comprendra que la valeur moyenne des "n" est un nombre fractionnaire, de préférence compris dans un domaine de 2 à 5.

A titre d'exemples de silanes polysulfurés, on citera plus particulièrement les polysulfures (notamment disulfures, trisulfures ou tétrasulfures) de bis-(alkoxy($C_1$-$C_4$)-alkyl($C_1$-$C_4$)silyl-alkyl($C_1$-$C_4$)). Classiquement on utilisé dans des compositions de caoutchouc diénique renforcées d'une charge inorganique des polysulfures de bis(3-triméthoxysilylpropyl) ou de bis(3-triéthoxysilylpropyl) tels que le tétrasulfure de bis(3-tri-éthoxysilylpropyl), en abrégé TESPT, ou le disulfure de bis-(triéthoxysilylpropyle), en abrégé TESPD.

Le TESPD est commercialisé par exemple par la société Degussa sous la dénomination Si75 (sous forme d'un mélange de disulfure - à 75% en poids - et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

Les Demanderesses ont mis en évidence, lors de leurs recherches, que le compromis de performances pneumatiques peut être davantage amélioré si l'agent de couplage est choisi parmi les polysulfures de bis-alkoxyalkylsilanes de formule générale décrite plus haut, et répondant à la formule (I):

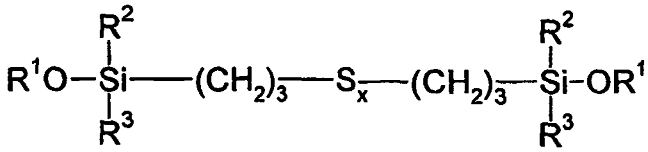

**(I)**

dans laquelle:

- les symboles $R^1$, identiques ou différents, représentent chacun un groupe hydrocarboné monovalent choisi parmi les alkyles, linéaires ou ramifiés, ayant de 1 à 4 atomes de carbone et les alkoxyalkyles, linéaires ou ramifiés, ayant de 2 à 8 atomes de carbone;
- les symboles $R^2$ et $R^3$, identiques ou différents, représentent chacun un groupe hydrocarboné monovalent choisi parmi les alkyles, linéaires ou ramifiés, ayant de 1 à 6 atomes de carbone et le radical phényle;
- x est un nombre entier ou fractionnaire compris entre 3 et 5.

Ainsi l'agent de couplage est avantageusement un monoalkoxysilane tétrasulfuré répondant à la formule (I) choisi parmi ceux de formules particulières (II), (III) ou (IV) ci-après:

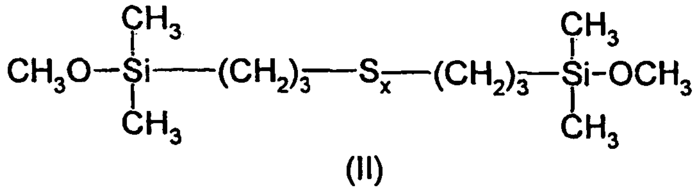

(II)

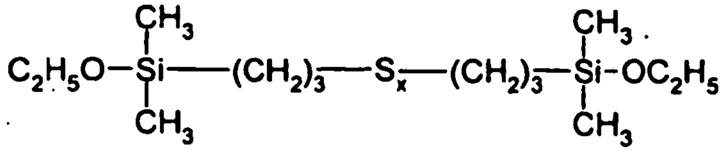

(III) (en abrégé MESPT)

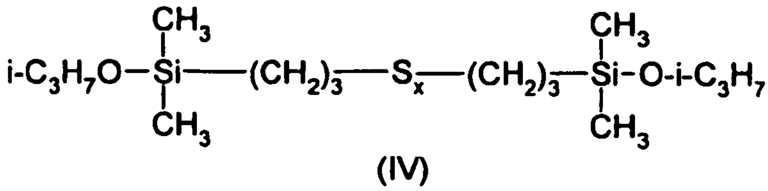

(IV)

dans lesquelles le symbole x a la définition générale (x moyen compris entre 3 et 5), et en particulier les définitions préférentielles données supra (soit x moyen compris dans un domaine de 3,5 à 4,5, plus préférentiellement encore dans un domaine de 3,8 à 4,2). Plus particulièrement, l'agent de couplage est le tétrasulfure de monoéthoxydiméthylsilylpropyle (en abrégé MESPT), de formule $[(C_2H_5O)(CH_3)_2Si(CH_2)_3S_2]_2$, homologue monoéthoxylé du TESPT précité.

Dans cette formule III, x est préférentiellement compris dans un domaine de 3,5 à 4,5, plus préférentiellement encore compris dans un intervalle de 3,8 à 4,2.

De tels composés, ainsi que leur procédé de préparation, sont plus amplement décrits dans la demande internationale (non publiée à ce jour) déposée sous le N° PCT/EP02/03774.

L'homme du métier saura ajuster la teneur en agent de couplage dans les compositions des pneumatiques de l'invention, en fonction de l'application visée, de la nature de l'élastomère utilisé et de la quantité de silice, complétée le cas échéant de toute autre charge inorganique employée à titre de charge renforçante complémentaire.

L'agent de couplage est utilisé à un taux préférentiel représentant entre 0,5% et 20% en poids par rapport à la quantité de charge inorganique renforçante. Des taux inférieurs à 15% sont plus particulièrement préférés.

De manière à tenir compte des différences de surface spécifique et de densité des charges inorganiques renforçantes susceptibles d'être utilisées, ainsi que des masses molaires des agents de couplage spécifiquement utilisés, il est préférable de déterminer le taux optimal d'agent de couplage en moles par mètre carré de charge inorganique renforçante, le cas échéant pour chaque charge inorganique renforçante utilisée ; ce taux optimal est calculé à partir du rapport pondéral [agent de couplage/charge inorganique renforçante], de la surface BET de la charge et de la masse molaire de l'agent de couplage (notée M ci-après), selon la relation connue suivante:

$$(\text{moles/m}^2 \text{ charge inorganique}) = [\text{agent de couplage/charge inorganique}]\ (1/\text{BET})\ (1/\text{M})$$

Ainsi, préférentiellement, la quantité d'agent de couplage utilisée dans les compositions des pneumatiques

conformes à l'invention est comprise entre $10^{-7}$ et $10^{-5}$ moles par $m^2$ de charge inorganique renforçante. Plus préférentiellement encore, la quantité d'agent de couplage est comprise entre $5.10^{-7}$ et $5.10^{-6}$ moles par $m^2$ de charge inorganique totale.

Compte tenu des quantités exprimées ci-dessus, de manière générale, la teneur en agent de couplage est de préférence comprise entre 1 et 20 pce. En dessous du minimum indiqué l'effet risque d'être insuffisant, alors qu'au-delà du maximum préconisé on n'observe généralement plus d'amélioration, alors que les coûts de la composition augmentent ; pour ces différentes raisons, cette teneur est plus préférentiellement encore comprise entre 2 et 10 pce.

Les Demanderesses ont par ailleurs mis en évidence qu'il est possible de réduire de l'ordre de 20% la quantité d'agent de couplage nécessaire dans une composition pour bande de roulement renforcée avec une silice, préparée selon le procédé de préparation décrit plus haut et/ou présentant les caractéristiques décrites ci-dessus, tout en maintenant un niveau de performances pneumatiques sensiblement identique. Une telle diminution du taux d'agent de couplage dans une composition contenant une silice conventionnelle a généralement pour effet de diminuer les performances pneumatiques. Cet aspect constitue donc un avantage des compositions en ce qui concerne le coût des pneumatiques.

L'agent de couplage utilisé pourrait être préalablement greffé (via la fonction "X") sur l'élastomère diénique de la composition, l'élastomère ainsi fonctionnalisé ou "précouplé" comportant alors la fonction "Y" libre pour la charge inorganique renforçante. L'agent de couplage pourrait également être préalablement greffé (via la fonction "Y") sur la charge inorganique renforçante, la charge ainsi "précouplée" pouvant ensuite être liée à l'élastomère diénique par l'intermédiaire des fonctions libres "X". On préfère toutefois utiliser l'agent de couplage à l'état libre (i.e., non greffé) ou greffé sur la charge inorganique renforçante, notamment pour des raisons de meilleure mise en oeuvre des compositions à l'état cru.

Enfin, à l'agent de couplage peut être éventuellement associé un "activateur de couplage" approprié, c'est-à-dire un corps (composé unique ou association de composés) qui, mélangé avec cet agent de couplage, augmente l'efficacité de ce dernier (voir par exemple demandes WO00/5300 et WO00/5301 précitées).

### II.4 <u>Additifs divers</u>

Bien entendu, les compositions élastomériques pour pneumatiques conformes à l'invention comportent également tout ou partie des additifs usuels utilisés dans des compositions de caoutchouc diénique destinées notamment à la fabrication de bandes de roulement de pneumatique, comme par exemple des huiles d'extension, des plastifiants, des agents de protection tels que cires anti-ozone, anti-ozonants chimiques, anti-oxydants, agents anti-fatigue, des promoteurs d'adhésion, des activateurs de couplage, des résines renforçantes, des accepteurs et/ou donneurs de méthylène, un système de réticulation à base soit de soufre, soit de donneurs de soufre et/ou de peroxyde et/ou de bismaléimides, des accélérateurs de vulcanisation, des activateurs de vulcanisation. A la silice utilisée dans l'invention peut être également associée, si besoin est, une charge blanche conventionnelle peu ou non renforçante, par exemple des particules d'argile, bentonite, talc, craie, kaolin, utilisables par exemple dans des bandes de roulement de pneumatique colorées.

Les compositions élastomériques peuvent également contenir, en complément des agents de couplage précédemment décrits, des agents de recouvrement pour charges inorganiques, comportant par exemple la seule fonction Y, ou plus généralement des agents d'aide à la mise en oeuvre susceptibles de manière connue, grâce à une amélioration de la dispersion de la charge inorganique renforçante dans la matrice de caoutchouc et à un abaissement de la viscosité des compositions, d'améliorer leur faculté de mise en oeuvre à l'état cru ; ces agents, utilisés à un taux préférentiel compris entre 0,5 et 3 pce, sont par exemple des alkylalkoxysilanes, notamment des alkyltriéthoxysilanes, comme le 1-octyl-triéthoxysilane commercialisé par la société Degussa-Hüls sous la dénomination Dynasylan Octeo ou le 1-hexadécyltriéthoxysilane commercialisé par la société Degussa-Hüls sous la dénomination Si216, des polyols, des polyéthers (par exemple des polyéthylène glycols), des amines primaires, secondaires ou tertiaires (par exemple des trialcanolamines), des polyorganosiloxanes hydroxylés ou hydrolysables, par exemple des $\alpha,\omega$-dihydroxypolyorganosiloxanes (notamment des $\alpha,\omega$-dihydroxy-polydiméthylsiloxanes).

### II.5 <u>Préparation des compositions de caoutchouc et bandes de roulement</u>

Les compositions élastomériques pour pneumatique sont fabriquées dans des mélangeurs appropriés, en utilisant deux phases de préparation successives bien connues de l'homme du métier : une première phase de travail ou malaxage thermomécanique (parfois qualifiée de phase "non-productive") à haute température, jusqu'à une température maximale (notée $T_{max}$) comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le système de réticulation ou vulcanisation de base ; de telles phases ont été décrites par exemple dans les demandes EP 501 227, EP 735 088, WO00/05300 ou WO00/05301 précitées.

Le procédé de fabrication des compositions est caractérisé en ce qu'au moins la silice utilisée dans l'invention (associée ou non à une autre charge inorganique renforçante ou à un noir de carbone) et l'agent de couplage sont incorporés par malaxage à l'élastomère diénique au cours de la première phase dite non-productive, c'est-à-dire que l'on introduit dans le mélangeur et que l'on malaxe thermomécaniquement, en une ou plusieurs fois, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge inorganique renforçante et agent de couplage), puis dans un deuxième temps, par exemple après une à deux minutes de malaxage, les éventuels agents de recouvrement ou de mise en oeuvre complémentaires et autres additifs divers, à l'exception du système de réticulation ou vulcanisation ; la densité apparente de la silice étant généralement faible, il peut être avantageux de fractionner son introduction en deux ou plusieurs parties.

Une seconde étape (voire plusieurs) de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge inorganique renforçante et de son agent de couplage. La durée totale du malaxage, dans cette phase non-productive, est de préférence comprise entre 2 et 10 minutes.

Après refroidissement du mélange ainsi obtenu, on incorpore alors le système de réticulation ou vulcanisation à basse température, généralement dans un mélangeur externe tel qu'un mélangeur à cylindres ; le tout est alors mélangé (phase productive) pendant quelques minutes, par exemple entre 5 et 15 minutes.

Le système de réticulation ou vulcanisation proprement dit est préférentiellement à base de soufre et d'un accélérateur primaire de vulcanisation, en particulier d'un accélérateur du type sulfénamide. A ce système de vulcanisation de base viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

En résumé, le procédé pour préparer une composition de caoutchouc diénique du pneumatique conforme à l'invention comporte les étapes suivantes :

i. on incorpore à un élastomère diénique, au cours d'une première étape dite "non-productive" :

- à titre de charge renforçante, une charge inorganique en tout ou partie constituée d'une silice obtenue selon le procédé décrit plus haut et/ou présentant les caractéristiques telles que définies plus haut.

- et un agent de couplage assurant la liaison entre la charge inorganique et l'élastomère diénique;

ii. on malaxe thermomécaniquement le tout, en une ou plusieurs fois, jusqu'à atteindre une température maximale comprise entre 110°C et 190°C;
iii. on refroidit l'ensemble à une température inférieure à 100°C;
iv. on incorpore ensuite, au cours d'une seconde étape dite "productive", un système de réticulation ou vulcanisation;
v. on malaxe le tout jusqu'à une température maximale inférieure à 110°C.

La composition finale ainsi obtenue est ensuite calandrée, par exemple sous la forme de plaques (épaisseur de 2 à 3 mm) ou de fines feuilles de caoutchouc pour la mesure de ses propriétés physiques ou mécaniques, notamment pour une caractérisation au laboratoire, ou encore extrudée pour former des profilés de caoutchouc utilisés directement pour la fabrication de semi-finis tels que des bandes de roulement, des nappes sommet, des flancs, des nappes carcasse, des talons, des protecteurs, des chambres à air ou des gommes intérieures étanches pour pneu sans chambre.

La vulcanisation ou cuisson de la composition de caoutchouc, en particulier de la bande de roulement réalisé avec celle-ci ou du pneumatique, est conduite de manière connue à une température préférentiellement comprise entre 130°C et 200°C, de préférence sous pression, pendant un temps suffisant qui peut varier par exemple entre 5 et 90 min en fonction notamment de la température de cuisson, du système de vulcanisation adopté, de la cinétique de vulcanisation de la composition considérée et de la taille du pneumatique.

Les compositions de caoutchouc diénique pour pneumatique précédemment décrites à base de silice sont

avantageusement utilisées pour la fabrication de bandes de roulement des pneumatiques conformes à l'invention. Dans ce cas, elles constituent généralement la totalité de la bande de roulement. Mais l'invention s'applique également aux cas où ces compositions de caoutchouc forment une partie seulement d'une bande de roulement du type composite, constituée par exemple de bandes adjacentes transversalement différentes, ou encore de deux couches radialement superposées de constitutions différentes, la partie chargée de silice pouvant constituer par exemple la couche radialement externe de la bande de roulement destinée à entrer en contact avec le sol dès le début du roulage du pneumatique neuf, ou au contraire sa couche radialement interne destinée à entrer en contact avec le sol ultérieurement.

Il va de soi que la présente invention concerne les pneumatiques précédemment décrits tant à l'état dit "cru" (i.e., avant cuisson) qu'à l'état dit "cuit" ou vulcanisé (i.e., après vulcanisation).

## III EXEMPLES DE REALISATION DE L'INVENTION

### III.1 1 Préparation de charges

III.1.1 Exemple 1 :

Dans un réacteur en acier inoxydable de 25 litres, on introduit 10 litres d'eau épurée. La solution est portée à 80°C. L'ensemble de la réaction est réalisé à cette température. Sous agitation (350 tr/min, agitation hélice), de l'acide sulfurique 80 g/l est introduit jusqu'à ce que le pH atteigne une valeur de 4.

On introduit simultanément dans le réacteur pendant 35 minutes une solution de silicate de sodium (de rapport pondéral $SiO_2/Na_2O$ égal à 3,52) ayant une concentration de 230 g/l et à un débit de 76 g/min et de l'acide sulfurique de concentration égale à 80 g/l à un débit régulé de manière à maintenir le pH du milieu réactionnel à une valeur de 4. A la $30^{ème}$ minute de l'addition, la vitesse d'agitation est portée à 450 tr/min

Au terme des 35 minutes d'addition simultanée, l'introduction d'acide est arrêtée tant que le pH n'a pas atteint une valeur égale à 9. Le débit de silicate est alors également arrêté. On procède à un mûrissement de 15 minutes à pH 9. A la fin du mûrissement, la vitesse d'agitation est amenée à 350 tr/min

Le pH est ensuite amené à pH 8 par introduction d'acide sulfurique. Une nouvelle addition simultanée est réalisée pendant 40 minutes avec un débit de silicate de sodium de 76 g/min (même silicate de sodium que pour la première addition simultanée) et un débit d'acide sulfurique de concentration égale à 80 g/l régulé de manière à maintenir le pH du milieu réactionnel à une valeur de 8.

A l'issue de cette addition simultanée, le milieu réactionnel est amené à un pH de 4 par de l'acide sulfurique 80 g/l. Le milieu est mûri pendant 10 minutes à pH 4. 250 ml de floculant FA 10 (polyoxyéthylène de masse molaire égale à $5.10^6$ g) à 1‰ sont introduits à la $3^{ème}$ minute du mûrissement.
La bouillie est filtrée et lavée sous vide (extrait sec de 16,7 %). Après dilution (extrait sec de 13%), le gâteau obtenu est délité mécaniquement. La bouillie résultante est atomisée au moyen d'un atomiseur à turbines.

La silice (charge B) obtenue présente les caractéristiques suivantes :

Surface BET : 240 $m^2/g$
Surface CTAB : 221 $m^2/g$
$d_w$ : 79 nm
Mode XDC: 39 nm
Largeur Ld (XDC) : 1,62
Largeur de distribution poreuse 1dp : 1,42
Largeur L'd (XDC) : 1,27
L/IF : 0,62
$V_{(d5 - d50)}/V_{(d5 - d100)}$: 0,74
Volume poreux $V_{80}$ : 1,69 $cm^3/g$
$N_{SiOH/nm}2$ : 3,90
Nombre de Sears x 1000 / surface BET : 42,9
$\alpha$ : 0,00626 $\mu m^{-1}.mn^{-1}$
$\varnothing_{50S}$ (après désagglomération aux ultra sons) : 4,8 $\mu$m
$F_{DS}$ : 4,6 ml

III.1.2 Exemple 2 :

Dans un réacteur de 2000 litres, on introduit 700 litres d'eau industrielle. Cette solution est portée à 80 °C par chauffage par injection directe de vapeur. Sous agitation (95 tr/min), de l'acide sulfurique, de concentration égale à 80 g/l, est introduit jusqu'à ce que le pH atteigne une valeur de 4.

On introduit simultanément dans le réacteur pendant 35 minutes une solution de silicate de sodium (de rapport pondéral $SiO_2/Na_2O$ égal à 3,52) ayant une concentration de 230 g/l à un débit de 190 1/heure et de l'acide sulfurique, de concentration égale à 80 g/l, à un débit régulé de manière à maintenir le pH du milieu réactionnel à une valeur de 4.

Au terme des 35 minutes d'addition simultanée, l'introduction d'acide est arrêtée tant que le pH n'a pas atteint une valeur égale à 8. Une nouvelle addition simultanée est ensuite réalisée pendant 40 minutes avec un débit de silicate de sodium de 190 1/heure (même silicate de sodium que pour la première addition simultanée) et un débit d'acide sulfurique, de concentration égale à 80 g/l, régulé de manière à maintenir le pH du milieu réactionnel à une valeur de 8.

A l'issue de cette addition simultanée, le milieu réactionnel est amené à un pH de 5,2 par de l'acide sulfurique de concentration égale à 80 g/l. Le milieu est mûri pendant 5 minutes à pH 5,2.

La bouillie est filtrée et lavée sous filtre presse (extrait sec du gâteau 22 %). Le gâteau obtenu est délité en ajoutant une quantité d'aluminate de sodium correspondant à un rapport pondéral $Al/SiO_2$ de 0,3 %. La bouillie résultante est atomisée au moyen d'un atomiseur à buses.

Les caractéristiques de la silice (charge C) obtenue sous forme de billes sensiblement sphériques sont alors les suivantes :

Surface BET : 222 $m^2/g$
Surface CTAB : 200 $m^2/g$
$d_w$ : 68 nm
Mode XDC : 34 nm
Largeur Ld (XDC) : 1,0
Largeur de distribution poreuse ldp : 1,51
Largeur L'd (XDC) : 0,93
L/IF: 0,70
$V_{(d5-\ d50}/V_{(d5-\ d100)}$: 0,71
Volume poreux $V_{80}$: 1,44 $cm^3/g$
$N_{SiOH/nm^2}$: 4,50
Nombre de Sears x 1000 surface BET: 31,5
$\alpha$: 0,00566 $\mu m^{-1}.mn^{-1}$
$Ø_{50S}$ (après désagglomération aux ultra sons) : 4,8 $\mu$m
$F_{DS}$: 5,4 ml
$Ø_{50M}$ (après désagglomération aux ultra sons) : 5,0 $\mu$m
$F_{DM}$: 11,5 ml

III.1.3 Exemple 3 :

Dans un réacteur en acier inoxydable de 25 litres, on introduit 10 litres d'une solution de silicate de sodium (de rapport pondéral $SiO_2/Na_2O$ égal à 3,53) ayant une concentration de 5 g/l. La solution est portée à 80 °C. Sous agitation (300 tr/min, agitation hélice), de l'acide sulfurique, de concentration égale à 80 g/l, est introduit jusqu'à ce que le pH atteigne une valeur de 4,2.
On introduit simultanément dans le réacteur pendant 35 minutes une solution de silicate de sodium (de rapport pondéral $SiO_2/Na_2O$ égal à 3,53) ayant une concentration de 230 g/l à un débit de 50 g/min et de l'acide sulfurique, de concentration égale à 80 g/l, à un débit régulé de manière à maintenir le pH du milieu réactionnel à une valeur de 4,2.
Au terme des 35 minutes d'addition simultanée, l'introduction d'acide est arrêtée tant que le pH n'a pas atteint une valeur égale à 9. Le débit de silicate est alors également arrêté. On procède à un mûrissement de 15 minutes à pH 9, tout en augmentant progressivement la température (en 15 minutes) de 80 à 90 °C, valeur à laquelle la suite de la réaction est effectuée.
Le pH est ensuite amené à pH 8 par introduction d'acide sulfurique de concentration égale à 80 g/l. Une nouvelle addition simultanée est réalisée pendant 50 minutes avec un débit de silicate de sodium de 50 g/min (même silicate de sodium que pour la première addition simultanée) et un débit d'acide sulfurique, de concentration égale à 80 g/l, régulé de manière à maintenir le pH du milieu réactionnel à une valeur de 8.
A l'issue de cette addition simultanée, le milieu réactionnel est amené à un pH de 4 par de l'acide sulfurique de concentration égale à 80 g/l. Le milieu est mûri pendant 10 minutes à pH 4.
La bouillie est filtrée et lavée sous vide (extrait sec du gâteau 16,8 %). Après dilution (extrait sec de 10 %), le gâteau obtenu est délité mécaniquement. La bouillie résultante est atomisée au moyen d'un atomiseur à turbines.

Les caractéristiques de la silice (charge D) obtenue sont alors les suivantes :

Surface BET : 174 $m^2/g$
Surface CTAB : 170 $m^2/g$

$d_w$ : 98 nm
Mode XDC : 41 nm nm
Largeur Ld(XDC): 3,1
Largeur de distribution poreuse ldp : 1,42
Largeur L'd (XDC) : 2,27
L/IF : 0,78
$V_{(d5-d50)}/V_{(d5-d100)}$: 0,78
Volume poreux $V_{80}$ : 1,38 $cm^3/g$
$N_{SiOH/nm^2}$ : 4.40
Nombre de Sears x 1000 / surface BET : 50,6
a : 0,00883 $\mu m^{-1}.mn^{-1}$
$Ø_{50S}$ (après désagglomération aux ultra sons) : 4,3 $\mu$m
$F_{DS}$ : 3,7 ml

## III. 2 Charges utilisées

Certaines caractéristiques des charges utilisées dans les exemples qui suivent sont résumées dans le tableau ci-après.

La charge notée A est une silice hautement dispersible conventionnelle à haute surface spécifique (BET d'environ 160 $m^2/g$), charge inorganique de référence pour le renforcement des bandes de roulement des "Pneus Verts" (silice "Zeosil 1165MP" de la société Rhodia).

Les charges B, C et D sont les silices hautement dispersibles obtenues dans les exemples 1, 2 et 3. Ces différentes silices vérifient avantageusement l'ensemble des caractéristiques qui suivent :

(a) une surface BET comprise dans un domaine de 130-300 $m^2/g$, notamment de 150-280 $m^2/g$;
(b) une surface CTAB comprise dans un domaine de 120-280 $m^2/g$, notamment de 140-260 $m^2/g$;
(c) une taille de particules $d_W$ comprise dans un domaine de 20 à 300 nm, notamment de 40 à 150 nm;
(d) une distribution de taille de particules telle que
(e) une porosité vérifiant le critère

$$dw \geq (16\,500 / CTAB) - 30;$$

(f) un taux de silanols par unité de surface, noté $N_{SiOH/nm^2}$,

$$L / IF \geq -0{,}0025\ CTAB + 0{,}85;$$

(g) une vitesse de désagglomération a au moins égale à 0.0035 $\mu m^{-1}.mn^{-1}$, voire d'au moins 0,0037 $\mu m^{-1}.mn^{-1}$ ;

Le tableau qui suit constitue un récapitulatif des charges utilisées dans les essais.

Charges utilisées dans les essais :

| Charge silice : | A | B | C | D |
|---|---|---|---|---|
| Surface BET ($m^2/g$) | 160 | 240 | 222 | 174 |
| Surface CTAB ($m^2/g$) | 155 | 221 | 200 | 170 |
| $d_w$ (nm) | 59 | 79 | 68 | 98 |
| L/IF | 0,39 | 0,62 | 0,70 | 0,78 |
| $N_{SiOH/nm^2}$ | 8,10 | 3,90 | 4,50 | 4,40 |
| $\alpha$ ($\mu m^{-1}.mn^{-1}$) | 0.0049 | 0.00626 | 0.00566 | 0.00883 |

## III.3 Préparation du tétrasulfure de bis-monoéthoxydiméthylsilylpropyle.

Le tétrasulfure de bis-monoéthoxydiméthylsilylpropyle est utilisé comme agent de couplage dans les essais 2.

Il est préparé suivant la méthode décrite dans la demande de brevet internationale (non publiée à ce jour) déposée sous le N° PCT/EP02/03774.

Dans un réacteur en verre de 3 litres double enveloppe qui est équipé d'un réfrigérant, d'une agitation mécanique (turbine de Rushton), d'un thermocouple, d'un tuyau d'admission de gaz (argon ou $H_2S$) et d'une arrivée pour la pompe péristaltique, 91,9 g d'éthanolate de sodium (1,352 mole, soit l'équivalent de 2 moles pour 1 mole de $H_2S$) en solution à 21% massique dans l'éthanol (438 g) et 250 ml de toluène sont introduits en pied sous courant d'argon.

L'ensemble est placé sous agitation (200-300 tours/min). Une masse de 65 g en soufre (2,031 moles, soit l'équivalent de 3 moles pour une mole de $H_2S$) est alors additionnée. Après une purge des circuits à l'argon, l'$H_2S$ (23 g, soit 0,676 mole) est introduit par bullage au moyen d'un tube plongeant, soit pendant 45 à 60 minutes. La solution passe d'une coloration orange avec des particules de couleur jaune orange à une coloration brun foncé sans particule.

Sous courant d'argon, le mélange est chauffé à 60°C durant 1 heure de manière à compléter la conversion en $Na_2S_4$ anhydre. Le milieu réactionnel passe d'une couleur brun foncé à une couleur rouge-brun avec des particules brunes. Le milieu réactionnel est alors refroidi à l'aide d'un moyen de réfrigération (à 10-15°C) pour atteindre une température voisine de 20°C.

Une masse de 244 g de $\gamma$-chloropropyléthoxydiméthylsilane (1,352 moles, soit l'équivalent de 2 moles pour une mole de $H_2S$) est ajoutée au moyen d'une pompe péristaltique (10 ml/min) sur 30 minutes. Le milieu réactionnel est ensuite chauffé à $75\pm2$°C durant 4h. En cours d'essai, le NaCl précipite. Au bout des 4 heures de chauffage, le milieu est refroidi à température ambiante (20-25°C). Il prend une couleur orange avec des particules jaunes.

Après dépotage du milieu réactionnel, il est filtré sur carton de cellulose sous pression d'azote dans un filtre en acier inoxydable. Le gâteau est lavé par 2 fois 100 ml de toluène. Le filtrat de couleur rouge brun est évaporé sous vide (pression maximum = $3\text{-}4.10^2$ Pa - température maximale = 70°C).

Une masse de 280 g de tétrasulfure de bis-monoéthoxydiméthylsilylpropyle (0,669 mole) est alors obtenue sous forme d'une huile de couleur jaune orange. Ce composé est utilisé comme agent de couplage dans les essais 2 qui suivent.

### <u>III. 4 Préparation des compositions</u>

On procède pour les essais qui suivent de la manière suivante: on introduit dans un mélangeur interne, rempli à 70% et dont la température initiale de cuve est d'environ 60°C, l'élastomère diénique (ou le mélange d'élastomères diéniques, le cas échéant), puis la charge renforçante, l'agent de couplage, puis, après une à deux minutes de malaxage, les divers autres ingrédients à l'exception du soufre et de l'accélérateur primaire sulfénamide. On conduit alors un travail thermomécanique (phase non-productive) en une ou deux étapes (durée totale du malaxage égale à environ 7 min), jusqu'à atteindre une température maximale de "tombée" d'environ 160-165°C.

On récupère le mélange ainsi obtenu, on le refroidit puis on ajoute soufre et accélérateur sulfénamide sur un mélangeur externe (homo-finisseur) à 30°C, en mélangeant le tout (phase productive) pendant 3 à 4 minutes.

Les compositions sont ensuite soit calandrées sous la forme de plaques (épaisseur de 2 à 3 mm) pour la mesure de leurs propriétés physiques ou mécaniques, soit extrudées directement sous la forme de bandes de roulement de pneumatique.

Dans les essais qui suivent, la silice HD constitue avantageusement la totalité de la charge inorganique renforçante, associée à un faible taux de noir de carbone (moins de 10 pce).

### III.5 <u>Essais</u>

#### III.5.1 <u>Essais 1 :</u>

Ces essais ont pour but de démontrer les performances améliorées d'une composition élastomérique à base de silice HD utilisée selon l'invention, comparée à une composition témoin utilisant une silice HD conventionnelle pour bande de roulement de "Pneu Vert".

On compare pour cela deux compositions de caoutchouc diénique (coupage SBR/BR) destinées à la fabrication de bandes de roulement pour pneumatique tourisme:

- composition notée C-1 (témoin) contient la silice A;
- composition notée C-2 (invention) contient la silice B.

Les tableaux 1 et 2 en annexe donnent successivement la formulation des différentes compositions (tableau 1 - taux des différents produits exprimés en pce), leurs propriétés avant et après cuisson à 150°C pendant 40 minutes (tableau 2).

La figure 1 reproduit les courbes de module (en MPa) en fonction de l'allongement (en %) ; ces courbes sont

notées C1 et C2 et correspondent respectivement aux compositions C-1 et C-2.

L'étude des résultats du tableau 2 démontre, pour la composition utilisée selon l'invention comparée à la composition témoin conventionnelle:

- une viscosité à l'état cru (97 UM) certes augmentée par rapport à C-1 (93 UM), mais qui s'explique par l'augmentation de la surface spécifique de la silice et donc de la surface possible de contact, en tout cas étonnamment très inférieure à celle que l'on aurait pu attendre pour une telle augmentation de la surface spécifique. Ceci traduit une mise en oeuvre aisée de B pour une telle surface spécifique;
- un taux de couplage charge/élastomère obtenu avec la charge B supérieur à celui atteint avec la charge A conventionnelle (illustré par la valeur Bound Rubber BR).
- des propriétés rhéométriques proches par rapport à C-1 comme illustré par les valeurs T5, $t_i$, $t_{90}$, $t_{90}$- $t_i$ et enfin K;
- des propriétés de renforcement après cuisson qui sont au moins équivalentes à celles de la composition témoin conventionnelle C-1: dureté Shore équivalente mais modules sous forte déformation (MA100, MA300) légèrement plus élevés et un rapport MA300/MA100 identique, autant d'indicateurs d'une bonne qualité du renforcement fourni par la silice HD utilisée selon l'invention.
- enfin et surtout, de manière encore plus inattendue pour l'homme du métier, des propriétés d'hystérèse significativement améliorées (diminution de $\Delta G^*$ et tan $(\delta)_{max}$.

La figure 1 annexée confirme bien ces résultats avec, pour des allongements de 100% et plus, un module supérieur dans le cas de la composition C-2 (courbe C2 au-dessus de la courbe C1 au-delà de 100%), preuve d'une forte interaction entre l'élastomère diénique et la silice HD utilisée selon l'invention.

De tels résultats doivent être maintenant confrontés à des tests réels de roulage des bandes de roulement, comme exposé dans le test qui suit.

Test de roulage :

Les compositions C-1 et C-2 précédentes sont utilisées dans ce test comme bandes de roulement pour pneumatique tourisme à carcasse radiale, de dimension 175/70 R14 (indice de vitesse T), conventionnellement fabriqués et en tous points identiques hormis la composition de caoutchouc constitutive de la bande de roulement : composition C-1 pour les "Pneus Verts" témoins (notés P-1) et composition C-2 pour les pneus selon l'invention (notés P-2).

Des pneumatiques ont d'abord été testés sur machine pour la détermination de leur résistance au roulement. Puis la résistance à l'usure de pneumatiques a ensuite été testée sur véhicule.

L'ensemble des résultats de roulage est résumé dans le tableau 3.

On constate tout d'abord que la résistance au roulement du pneu est améliorée de 4%, ce qui est significatif et synonyme d'une diminution de la consommation de carburant pour un véhicule équipé de pneus conformes à l'invention.

On soumet ensuite les pneumatiques à un roulage sur route, sur un véhicule tourisme de marque Citroën Xsara, pour détermination de la résistance à l'usure. De manière connue, la résistance à l'usure de la bande de roulement, au cours du roulage du pneumatique, est directement corrélée au niveau de renforcement apporté par la charge renforçante et son agent de couplage associé. En d'autres termes, la mesure de la résistance à l'usure est un excellent indicateur, sinon le meilleur puisque évalué sur le produit manufacturé final, de la performance globale de la charge inorganique utilisée.

On constate en outre une amélioration très significative de la résistance à l'usure de 14% par rapport au résultat obtenu avec le témoin conventionnel (silice A). Pour un homme du métier, une telle augmentation de la résistance à l'usure est considérée comme particulièrement importante et surprenante.

Les propriétés techniques, significativement améliorées pour certaines, des compositions et bandes de roulement des pneumatiques selon l'invention par rapport à celles des compositions et bandes de roulement conventionnelles de l'art antérieur, constituent un compromis de propriétés particulièrement intéressant et inattendu de la part de l'homme du métier.

III.5.2 Essais 2 :

Ces essais ont pour but de démontrer les performances encore améliorées d'une composition éiastomérique à base de silice HD utilisée selon l'invention comprenant du tétrasulfure de bis-monoéthoxydiméthylsilylpropyle (MESPT) comme agent de couplage, comparée à une composition élastomérique à base de la même silice HD utilisée selon l'invention, ainsi qu'à une composition témoin utilisant une silice HD conventionnelle pour bande de roulement de "Pneu Vert", ces deux compositions comprenant du TESPT à titre d'agent de couplage.

On compare pour cela trois compositions de caoutchouc diénique (coupage SBR/BR) destinées à la fabrication

de bandes de roulement pour pneumatique tourisme:

- composition notée C-3 (témoin) contient la silice A et du TESPT;
- composition notée C-4 (invention) contient la silice C et du TESPT.
- composition notée C-5 (invention) contient la silice C et du MESPT.

Les tableaux 4 et 5 en annexe donnent successivement la formulation des différentes compositions (tableau 4 - taux des différents produits exprimés en pce), leurs propriétés avant et après cuisson à 150°C pendant 40 minutes (tableau 5). Les taux d'agent de couplage sont à iso nombre de moles dans les compositions C-4 et C-5.

L'étude des résultats du tableau 5 démontre,:

- une viscosité à l'état cru sensiblement identique des deux compositions des pneumatiques selon l'invention C-4 et C-5 et étonnamment proche de celle la composition conventionnelle C-3, alors que la surface spécifique de la silice utilisée selon l'invention est bien supérieure à celle de la silice conventionnelle et donc la surface possible de contact également. Ceci traduit une mise en oeuvre aisée de la silice C pour une telle surface spécifique;
- un taux de couplage charge/élastomère obtenu avec la charge C supérieur à celui atteint avec la charge A conventionnelle (illustré par la valeur Bound Rubber BR).
- une amélioration significative de la cinétique de cuisson en associant à la silice C utilisée selon l'invention du MESPT comme agent de couplage, par rapport à la cinétique de cuisson d'une composition contenant une association de TESPT à une silice conventionnelle ou une même silice utilisée selon l'invention ;
- des propriétés de renforcement après cuisson qui sont au moins équivalentes à celles de la composition témoin conventionnelle C-1: dureté Shore équivalente mais modules sous forte déformation (MA100, MA300) légèrement plus élevés et un rapport MA300/MA100 proche, autant d'indicateurs d'une bonne qualité du renforcement fourni par la silice HD utilisée selon l'invention.
- enfin et surtout, de manière encore plus inattendue pour l'homme du métier, des propriétés d'hystérèse significativement améliorées (diminution de $\Delta G^*$ et $\tan(\delta)_{max}$) pour la composition associant la silice utilisée selon l'invention au MESPT, non seulement par rapport à la composition conventionnelle témoin, mais encore par rapport à une composition de pneumatique selon l'invention associant à la silice du TESPT.

De tels résultats doivent être maintenant confrontés à des tests réels de roulage des bandes de roulement, comme exposé dans le test qui suit.

<u>Test de roulage :</u>

Les compositions C-3, C-4 et C-5 précédentes sont utilisées dans ce test comme bandes de roulement pour pneumatique tourisme à carcasse radiale, de dimension 175/70 R14 (indice de vitesse T), conventionnellement fabriqués et en tous points identiques hormis la composition de caoutchouc constitutive de la bande de roulement : composition C-3 pour les "Pneus Verts" témoins (notés P-3) et compositions C-4 et C-5 pour les pneus selon l'invention (notés P-4 et P-5).

Des pneumatiques ont d'abord été testés sur machine pour la détermination de leur résistance au roulement. Puis la résistance à l'usure de pneumatiques a ensuite été testée sur véhicule.

L'ensemble des résultats de roulage est résumé dans le tableau 6.

On constate tout d'abord que la résistance au roulement des pneumatiques conformes à l'invention est améliorée de manière significative par rapport au témoin conventionnel, synonyme d'une diminution de la consommation de carburant pour un véhicule équipé de pneus conformes à l'invention. On constate également une amélioration de 3% supplémentaire, ce qui est significatif, si on associe à la silice du MESPT à titre d'agent de couplage plutôt que du TESPT conventionnel. Ceci est synonyme d'une diminution encore plus marquée de la consommation de carburant pour un véhicule équipé de pneus conformes à l'invention pour lesquels la composition de caoutchouc constitutive de la bande de roulement comprend du MESPT comme agent de couplage. De telles améliorations sont significatives et inattendues pour un homme du métier.

On soumet ensuite les pneumatiques à un roulage sur route, sur un véhicule tourisme de marque Peugeot 306, pour détermination de la résistance à l'usure. De manière connue, la résistance à l'usure de la bande de roulement, au cours du roulage du pneumatique, est directement corrélée au niveau de renforcement apporté par la charge renforçante et son agent de couplage associé. En d'autres termes, la mesure de la résistance à l'usure est un excellent indicateur, sinon le meilleur puisque évalué sur le produit manufacturé final, de la performance globale de la charge inorganique utilisée.

On constate en outre une amélioration très significative de la résistance à l'usure de 9 à 10% des pneumatiques conformes à l'invention par rapport au résultat obtenu avec le témoin conventionnel (silice A). Pour un homme du métier,

une telle augmentation de la résistance à l'usure est considérée comme particulièrement importante et surprenante.

L'amélioration du compromis de performances de bandes de roulement de pneumatiques selon l'invention associant un agent de couplage spécifique, le MESPT, à la silice par rapport à celui de bandes de roulement de pneumatiques selon l'invention associant du TESPT conventionnel comme agent de couplage à la silice, est significative et surprenante.

Les propriétés techniques, significativement améliorées pour certaines, des compositions et bandes de roulement de pneumatiques selon l'invention par rapport à celles des compositions et bandes de roulement conventionnelles de l'art antérieur, constituent un compromis de propriétés particulièrement intéressant et inattendu de la part de l'homme du métier.

III.5.3 Essais 3 :

Ces essais ont pour but de démontrer les performances améliorées d'une composition élastomérique à base de silice HD utilisée selon l'invention, comparée à une composition témoin utilisant une silice HD conventionnelle pour bande de roulement de "Pneu Vert", les deux silices ayant des surfaces spécifiques proches.

On compare pour cela deux compositions de caoutchouc diénique (coupage SBR/BR) destinées à la fabrication de bandes de roulement pour pneumatique tourisme:

- composition notée C-6 (témoin) contient la silice A;
- composition notée C-7 (invention) contient la silice D.

Les tableaux 7 et 8 en annexe donnent successivement la formulation des différentes compositions (tableau 7 - taux des différents produits exprimés en pce), leurs propriétés avant et après cuisson à 150°C pendant 40 minutes (tableau 8).

L'étude des résultats du tableau 8 démontre, pour la composition pour pneumatique selon l'invention comparée à la composition témoin conventionnelle:

- une viscosité à l'état cru et un taux de couplage charge/élastomère sensiblement identiques à celles de la composition témoin conventionnelle.
- des propriétés rhéométriques proches, voire meilleures, comme illustré par les valeurs $t_{90}$-$t_i$ et enfin K de celles de la composition témoin conventionnelle, avec une cinétique accrue pour une même surface spécifique;
- des propriétés de renforcement qui sont légèrement supérieures à celles de la composition témoin conventionnelle, comme le montrent les valeurs du rapport MA 100 et MA300.
- enfin et surtout, de manière encore plus inattendue pour l'homme du métier, des propriétés d'hystérèse significativement améliorées (diminution de $\Delta G^*$ et $\tan(\delta)_{max}$), ce qui laisse présager d'une amélioration du compromis de performances résistance au roulement/résistance à l'usure.

Les propriétés à cru comme à cuit pour la composition du pneumatique selon l'invention par rapport à la composition conventionnelle de l'art antérieur, constituent un très bon compromis particulièrement intéressant pour un homme du métier.

**TABLEAU 1 :**

| Composition N°: | C-1 | C-2 |
|---|---|---|
| SBR (1) | 82.6 | 82.6 |
| BR (2) | 30 | 30 |
| silice A | 80 | - |
| silice B | - | 80 |
| noir de carbone (3) | 6 | 6 |
| huile aromatique (4) | 20 | 20 |
| TESPT (5) | 6.4 | 8.8 |
| DPG (6) | 1.5 | 2 |
| ZnO | 2.5 | 2.5 |
| acide stéarique | 2 | 2 |
| paraffine (7) | 1.5 | 1.5 |
| antioxydant (8) | 2.0 | 2.0 |

(suite)

| Composition N°: | C-1 | C-2 |
|---|---|---|
| soufre<br>accélérateur (9) | 1<br>2 | 1<br>2 |
| (1) SSBR avec 59,5% de motifs polybutadiène 1-2 ; 26,5% de styrène ; Tg = -29°C 70 pce SBR sec étendu avec 18% en poids d'huile aromatique (soit un total SSBR + huile égal à 82,6 pce);<br>(2) BR avec 4,3 % de 1-2 ; 2,7% de trans ; 93% de cis 1-4 (Tg = -106°C);<br>(3) noir de carbone N234;<br>(4) huile aromatique sous forme libre ("Enerflex 65" de la société BP);<br>(5) TESPT ("Si69" de la société Degussa);<br>(6) diphénylguanidine ("Vulcacit D" de la société Bayer);<br>(7) mélange de cires anti-ozone macro- et micro-cristallines;<br>(8) N-1,3-diméthylbutyl-N-phényl-para-phénylènediamine ("Santoflex 6-PPD" de la société Flexsys);<br>(9) N-cyclohexyl-2-benzothiazyl-sulfénamide (société Flexsys: "Santocure" CBS). | | |

**TABLEAU 2:**

| Composition N°: | C-1 | C-2 |
|---|---|---|
| *Propriétés avant cuisson:* | | |
| Mooney | 93 | 97 |
| BR(%) | 49 | 63 |
| $t_i$ (min) | 9.0 | 9.5 |
| $t_{90}$ (min) | 22.4 | 25.3 |
| $t_{90}$- $t_i$ (min) | 13.4 | 15.8 |
| K ($min^{-1}$) | 0.17 | 0.15 |
| *Propriétés après cuisson:* | | |
| dureté Shore | 66.5 | 67 |
| MA10 (MPa) | 5.70 | 5.63 |
| MA100 (MPa) | 1.73 | 1.89 |
| MA300 (MPa) | 2.09 | 2.29 |
| MA300/MA100 | 1.21 | 1.21 |
| $\Delta G^*$ | 4.85 | 3.65 |
| $\tan(\delta)_{max}$ (40°C) | 0.300 | 0.266 |

**TABLEAU 3 :**

| Propriétés (en unités relatives) | P-1 | P-2 |
|---|---|---|
| Résistance au roulement : | 100 | 104 |
| Résistance à l'usure : | 100 | 114 |
| (une valeur supérieure à 100 indique une performance améliorée) | | |

**TABLEAU 4 :**

| Composition N°: | C-3 | C-4 | C-5 |
|---|---|---|---|
| SBR (1) | 82.5 | 82.5 | 82.5 |
| BR (2) | 30 | 30 | 30 |
| Silice A (3) | 80 | | |
| Silice C (4) | | 80 | 80 |
| noir de carbone (5) | 6 | 6 | 6 |
| huile aromatique (6) | 20.0 | 20.0 | 20.0 |
| TESPT (7) | 6.4 | 8.7 | |
| MESPT (8) | | | 6.8 |
| DPG (9) | 1.5 | 2 | 2 |
| ZnO | 2.5 | 2.5 | 2.5 |
| Acide stéarique | 2 | 2 | 2 |
| Paraffine (10) | 1.5 | 1.5 | 1.5 |
| Antioxydant (11) | 2.0 | 2.0 | 2.0 |
| Soufre | 1.1 | 1.1 | 1.1 |
| Accélérateur (12) | 2.0 | 2.0 | 2.0 |

(1) SSBR avec 59,5% de motifs polybutadiène 1-2 ; 26,5% de styrène ; Tg = -29°C 75 pce SBR sec étendu avec 18% en poids d'huile aromatique (soit un total SSBR + huile égal à 88,5 pce);
(2) BR avec 4,3 % de 1-2 ; 2,7% de trans ; 93% de cis 1-4 (Tg = -106°C);
(3) Silice A témoin : type « HDS » - « Zeosil » 1165MP de la société Rhodia sous forme de microperles (BET et CTAB : environ 150-160m$^2$/g)
(4) Silice C selon invention....
(5) Noir de carbone N234;
(6) huile aromatique sous forme libre ("Enerflex 65" de la société BP);
(7) TESPT ("Si69" de la société Degussa);
(8) MESPT (synthétisé selon III.4)
(9) diphénylguanidine ("Vulcacit D" de la société Bayer);
(10) mélange de cires anti-ozone macro- et micro-cristallines;
(11) N-1,3-diméthylbutyl-N-phényl-para-phénylènediamine ("Santoflex 6-PPD" de la société Flexsys);
(12) N-cyclohexyl-2-benzothiazyl-sulfénamide (société Flexsys: "Santocure" CBS).

**TABLEAU 5 :**

| Composition N°: | C-3 | C-4 | C-5 |
|---|---|---|---|
| *Propriétés avant cuisson:* | | | |
| Mooney | 101 | 99 | 99.5 |
| T5 (min) | 16 | 14 | 16 |
| BR (%) | 50 | 60.5 | 59.2 |

(suite)

| Composition N°: | C-3 | C-4 | C-5 |
|---|---|---|---|
| *Propriétés avant cuisson:* | | | |
| $T_i$ (min) | 7.9 | 6.91 | 8.22 |
| $T_{90}$ (min) | 20.9 | 22.7 | 18.92 |
| $t_{90}$- $t_i$ (min) | 13 | 15.79 | 10.7 |
| K ($min^{-1}$) | 0.180 | 0.150 | 0.220 |
| *Propriétés après cuisson:* | | | |
| Dureté Shore | 65.4 | 66.7 | 66.5 |
| MA10 (MPa) | 5.25 | 5.75 | 5.8 |
| MA100 (MPa) | 1.74 | 2.08 | 2.05 |
| MA300 (MPa) | 2.15 | 2.59 | 2.65 |
| MA300/MA100 | 1.24 | 1.25 | 1.29 |
| $\Delta G^*$ | 4.02 | 3.61 | 3.14 |
| $\tan(\delta)_{max}$ (40°C) | 0.274 | 0.249 | 0.226 |

**TABLEAU 6 :**

| Propriétés (en unités relatives) | P-3 | P-4 | P-5 |
|---|---|---|---|
| Résistance au roulement : | 100 | 103 | 106 |
| Résistance à l'usure : | 100 | 110 | 109 |
| (une valeur supérieure à 100 indique une performance améliorée) | | | |

**TABLEAU 7:**

| Composition N° | C-6 | C-7 |
|---|---|---|
| SBR (1) | 103.12 | 103.12 |
| BR (2) | 25 | 25 |
| Silice A (3) | 80 | - |
| Silice D (4) | - | 80 |
| Noir de carbone (5) | 1 | 1 |
| Huile aromatique (6) | 5.13 | 5.13 |
| TESPT (7) | 6.4 | 7.00 |
| DPG (8) | 1.5 | 1.64 |
| ZnO | 2.5 | 2.5 |
| Acide stéarique | 2.0 | 2.0 |
| Antioxydant (9) | 1.9 | 1.9 |
| Soufre | 1.1 | 1.1 |

(suite)

| Composition N° | C-6 | C-7 |
|---|---|---|
| Accélérateur (10) | 2.0 | 2.0 |

(1) SSBR avec 58% de motifs polybutadiène 1-2 ; 25% de styrène ; Tg = -25°C ; SBR étendu avec 37.5 pce d'huile aromatique ( soit 75pce de SSBR + 28.12 pce d'huile)
(2) BR avec 4.3% de 1-2 ; 2.7% de trans ; 93% de cis 1-4 (Tg =-106°C)
(3) Silice A témoin : type « HDS » - « Zeosil » 1165MP de la société Rhodia sous forme de microperles (BET et CTAB : environ 150-160m$^2$/g)
(4) Silice D de selon l'invention;
(5) Noir de carbone N234;
(6) huile aromatique sous forme libre ("Enerflex 65" de la société BP);
(7) TESPT ("Si69" de la société Degussa);
(8) diphénylguanidine ("Vulcacit D" de la société Bayer);
(9) N-1,3-diméthylbutyl-N-phényl-para-phénylènediamine ("Santoflex 6-PPD" de la société Flexsys);
(10) N-cyclohexyl-2-benzothiazyl-sulfénamide (société Flexsys: "Santocure" CBS).

TABLEAU8:

| Compositions N° | C-6 | C-7 |
|---|---|---|
| *Propriétés avant cuisson* | | |
| Mooney | 104 | 103 |
| BR (%) | 54.2 | 56.9 |
| $t_i$ (min) | 12.8 | 15.1 |
| $t_{90}$ (min) | 31.5 | 31.2 |
| $1_{90}$- $t_i$ | 18.7 | 16.1 |
| K (min$^{-1}$) | 0.123 | 0.143 |
| *Propriétés après cuisson* | | |
| Dureté Shore | 69.2 | 66.6 |
| MA10 (MPa) | 6.4 | 5.28 |
| MA100 MPa) | 1.8 | 1.95 |
| MA300 (MPa) | 2.05 | 2.25 |
| MA300 /MA100 | 1.14 | 1.15 |
| ΔG* | 5.02 | 2.63 |
| Tan(δ)$_{max}$ (23°C) | 0.330 | 0.262 |

## Revendications

**1.** Pneumatique comportant une composition de caoutchouc à base d'au moins un élastomère diénique, une charge

inorganique renforçante et un agent de couplage assurant la liaison entre la charge inorganique et l'élastomère, **caractérisé en ce que** ladite charge inorganique comprend au moins une silice présentant les caractéristiques suivantes:

a) une surface spécifique BET entre 45 et 400 $m^2/g$ ;
b) une surface spécifique CTAB entre 40 et 380 $m^2/g$ ;
c) une taille moyenne (en masse) de particules, notée $d_w$, de 20 à 300 nm ;
d) une distribution de taille de particules telle que :

$$d_w \geq (16\,500 / CTAB) - 30 ;$$

e) une porosité vérifiant le critère (L et IF représentant respectivement la largeur de la distribution des pores et l'indice de finesse) :

$$L / IF \geq -0{,}0025\ CTAB + 0{,}85 ;$$

f) un taux de silanols par unité de surface noté $N_{SiOH/nm^2}$ tel que :

$$N_{SiOH/nm^2} \leq -0{,}027\ CTAB + 10{,}5.$$

**2.** Pneumatique selon la revendication 1, ladite silice présentant une surface spécifique BET comprise entre 80 et 300 $m^2/g$ et une surface spécifique CTAB comprise entre 70 et 280 $m^2/g$.

**3.** Pneumatique selon les revendications 1 ou 2, ladite silice présentant une surface spécifique BET comprise entre 130 et 300 $m^2/g$ et une surface spécifique CTAB comprise entre 120 et 280 $m^2/g$.

**4.** Pneumatique selon l'une quelconque des revendications 1 à 3, ladite silice présentant des surfaces spécifiques BET et CTAB, notées respectivement $S_{BET}$ et $S_{CTAB}$, vérifiant la relation $(S_{BET-SCTAB)} \geq 5\ m^2/g$.

**5.** Pneumatique selon l'une quelconque des revendications 1 à 4, ladite silice présentant des surfaces spécifiques BET et CTAB vérifiant la relation $(S_{BET}-S_{CTAB}) < 50\ m^2/g$.

**6.** Pneumatique selon l'une quelconque des revendications 1 à 5, ladite silice présentant une vitesse de désagglomération, notée $\alpha$, mesurée au test dit de désagglomération aux ultrasons en mode pulsé (1s ON, 1s OFF), à 100% de puissance d'une sonde d'ultrasons de 600 W, d'au moins 0,0035 $um^{-1}.mn^{-1}$.

**7.** Pneumatique selon l'une quelconque des revendications 1 à 6, ladite composition de caoutchouc comportant en outre du noir de carbone.

**8.** Pneumatique selon la revendication 7, le taux de noir de carbone étant compris entre 2 et 20 pce, de préférence dans un domaine de 5 à 15 pce.

**9.** Pneumatique selon l'une quelconque des revendications 1 à 8, l'agent de couplage étant choisi parmi les alkoxysilanes polysulfurés de formule :

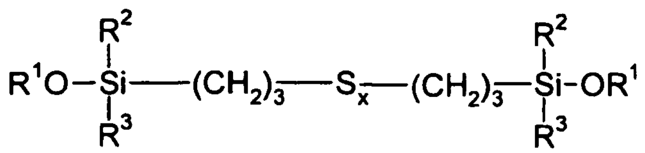

(I)

dans laquelle:

- les symboles $R^1$, identiques ou différents, représentent chacun un groupe hydrocarboné monovalent choisi parmi les alkyles, linéaires ou ramifiés, ayant de 1 à 4 atomes de carbone et les alkoxyalkyles, linéaires ou ramifiés, ayant de 2 à 8 atomes de carbone;
- les symboles $R^2$ et $R^3$, identiques ou différents, représentent chacun un groupe hydrocarboné monovalent choisi parmi les alkyles, linéaires ou ramifiés, ayant de 1 à 6 atomes de carbone et le radical phényle;
- x est un nombre entier ou fractionnaire compris entre 3 et 5.

**10.** Pneumatique selon la revendication 9, l'agent de couplage étant choisi parmi ceux de formules particulières (II), (III) ou (IV) ci-après:

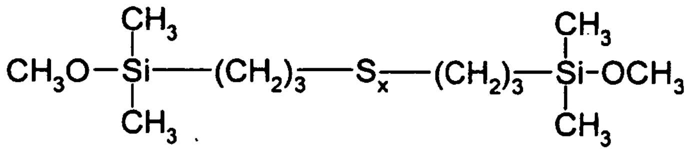

(II)

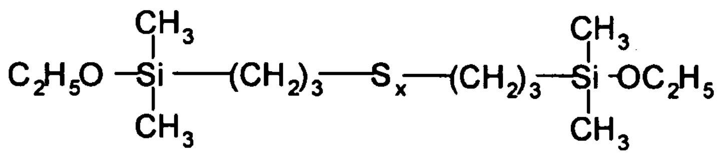

(III)

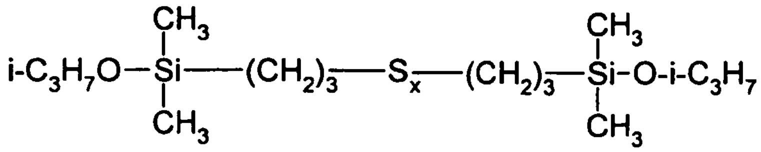

(IV)

dans lesquelles le symbole x est un nombre entier ou fractionnaire compris entre 3 et 5, de préférence compris dans un domaine de 3,5 à 4,5.

**11.** Pneumatique selon la revendication 10, l'agent de couplage étant le tétrasulfure de monoéthoxydiméthylsilylpropyle de formule (III).

**12.** Pneumatique selon l'une quelconque des revendications 1 à 11, ladite composition de caoutchouc étant présente dans la bande de roulement du pneumatique.

**13.** Utilisation pour la fabrication ou le renforcement d'un pneumatique, d'une silice présentant les caractéristiques suivantes:

a) une surface spécifique BET entre 45 et 400 $m^2/g$ ;
b) une surface spécifique CTAB entre 40 et 380 $m^2/g$ ;
c) une taille moyenne (en masse) de particules, notée $d_w$, de 20 à 300 nm ;
d) une distribution de taille de particules telle que :

$$dw \geq (16\,500 / CTAB) - 30 ;$$

e) une porosité vérifiant le critère :

$$L / \bar{IF} \geq -0{,}0025\ CTAB + 0{,}85 ;$$

f) un taux de silanols par unité de surface noté $N_{SiOH/nm^2}$ tel que :

$$N_{SiOH/nm^2} \leq -0{,}027\ CTAB + 10{,}5.$$

**14.** Utilisation selon la revendication 13, ladite silice présentant une surface spécifique BET comprise entre 80 et 300 $m^2/g$ et une surface spécifique CTAB comprise entre 70 et 280 $m^2/g$.

**15.** Utilisation selon les revendications 13 ou 14, ladite silice présentant une surface spécifique BET comprise entre 130 et 300 $m^2/g$ et une surface spécifique CTAB comprise entre 120 et 280 $m^2/g$.

**16.** Utilisation selon l'une quelconque des revendications 13 à 15, ladite silice présentant des surfaces spécifiques BET et CTAB, notées respectivement $S_{BET}$ et $S_{CTAB}$, vérifiant la relation $(S_{BET}-S_{CTAB}) \geq 5\ m^2/g$.

**17.** Utilisation selon l'une quelconque des revendications 13 à 16, ladite silice présentant des surfaces spécifiques BET et CTAB vérifiant la relation $(S_{BET}-S_{CTAB}) < 50\ m^2/g$.

**18.** Utilisation selon l'une quelconque des revendications 13 à 17, **caractérisé en ce que** ladite silice présente une vitesse de désagglomération, notée $\alpha$, mesurée au test dit de désagglomération aux ultrasons en mode pulsé (1s ON, 1s OFF), à 100% de puissance d'une sonde d'ultrasons de 600 W, d'au moins 0,0035 $\mu m^{-1}.mn^{-1}$.

## Claims

**1.** A tyre comprising a rubber composition based on at least a diene elastomer, a reinforcing inorganic filler and a coupling agent providing the bond between the reinforcing filler and the elastomer, **characterised in that** said inorganic filler comprises at least a silica having the following characteristics:

a) a BET specific surface area between 45 and 400 $m^2/g$ ;
b) a CTAB specific surface area between 40 and 380 $m^2/g$ ;
c) an average particle size (by mass), $d_w$, of 20 to 300 nm ;
d) a particle size distribution such that

$$dw \geq (16\,500 / CTAB) - 30;$$

e) a porosity which meets the criterion (L and IF being respectively the pore distribution width and the fineness index) :

$$L / IF \geq -0.0025\ CTAB + 0.85;$$

f) an amount of silanols per unit of surface area, $N_{SiOH/nm^2}$, such that :

$$N_{SiOH/nm^2} \leq -0.027\ CTAB + 10.5.$$

**2.** Tyre according to claim 1, said silica having a BET specific surface area between 80 and 300 $m^2/g$ and a CTAB specific surface area between 70 and 280 $m^2/g$.

**3.** Tyre according to claim 1 ou 2, said silica having a BET specific surface area between 130 and 300 $m^2/g$ and a CTAB specific surface area between 120 and 280 $m^2/g$.

**4.** Tyre according to anyone of claims 1 to 3, said silica having BET and CTAB specific areas, respectively noted $S_{BET}$ and $S_{CTAB}$, which meet the relationship :

$$(S_{BET} - S_{CTAB}) \geq 5\ m^2/g$$

**5.** Tyre according to anyone of claims 1 to 4, said silica having BET and CTAB specific areas which meet the relationship $(S_{BET} - S_{CTAB}) < 50\ m^2/g$.

**6.** Tyre according to anyone of claims 1 to 5, said silica having a disagglomeration rate, $\alpha$, measured by means of an ultrasound disagglomeration test in pulse mode (1 s ON, 1 s OFF), at 100% power of a 600 W ultrasound probe, of at least 0.0035 $\mu m^{-1}.mn^{-1}$.

**7.** Tyre according to anyone of claims 1 to 6, said composition comprising carbon black.

**8.** Tyre according to claim 7, the amount of carbon black being between 2 and 20 phr, preferably within a range from 5 to 15 phr.

**9.** Tyre according to anyone of claims 1 to 8, the coupling agent being selected from among the polysulphurised alkoxysilanes of the formula:

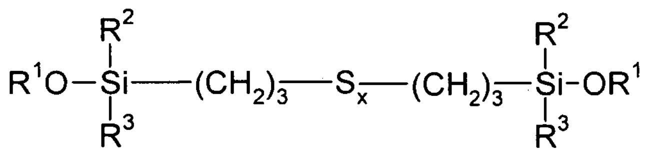

(I)

in which:

- the symbols $R^1$, which may be identical or different, each represent a monovalent hydrocarbon group selected from among alkyls, whether straight-chain or branched, having from 1 to 4 carbon atoms and alkoxyalkyls, whether straight-chain or branched, having from 2 to 8 carbon atoms;
- the symbols $R^2$ and $R^3$, which may be identical or different, each represent a monovalent hydrocarbon group selected from among alkyls, which are straight-chain or branched, having from 1 to 6 carbon atoms and the phenyl radical;
- x is an integer or fraction of between 3 and 5.

**10.** A tyre according to Claim 9, the coupling agent being selected from among those of specific formulae (II), (III) or (IV) hereafter:

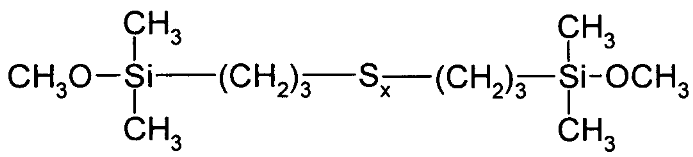

(II)

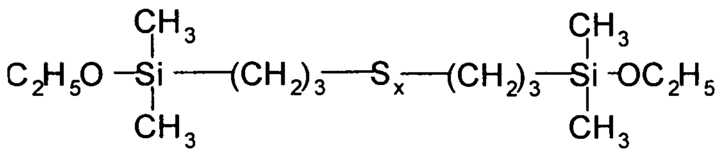

(III) (abbreviated to MESPT)

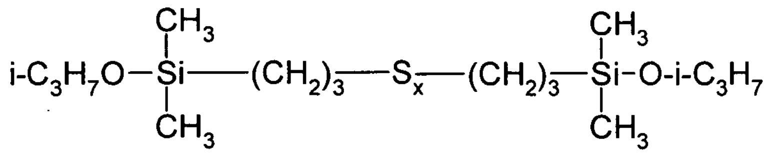

(IV)

in which the symbol x is an integer or fractional number of between 3 and 5, preferably within a range from 3.5 to 4.5.

**11.** Tyre according to claim 10, the coupling agent being the monoethoxydimethylsilylpropyl tetrasulphide of formula (III).

**12.** Tyre according to anyone of claims 1 to 11, said rubber composition being present in the tread of the tyre.

**13.** Use, for the manufacturing or the reinforcing of a tyre, of a silica having the following characteristics :

a) a BET specific surface area between 45 and 400 $m^2/g$ ;
b) a CTAB specific surface area between 40 and 380 $m^2/g$ ;
c) an average particle size (by mass), $d_w$, of 20 to 300 nm ;
d) a particle size distribution such that :

$$dw \geq (16\,500 / CTAB) - 30;$$

e) a porosity which meets the criterion :

$$L / IF \geq -0.0025\ CTAB + 0.85;$$

f) an amount of silanols per unit of surface area, $N_{SiOH/nm}2$, such that :

$$N_{SiOH/nm}{}^2 \leq -0.027\ CTAB + 10.5.$$

**14.** Use according to claim 13, said silica having a BET specific surface area between 80 and 300 $m^2/g$ and a CTAB specific surface area between 70 and 280 $m^2/g$.

**15.** Use according to claim 13 or 14, said silica having a BET specific surface area between 130 and 300 $m^2/g$ and a CTAB specific surface area between 120 and 280 $m^2/g$.

**16.** Use according to anyone of claims 13 to 15, said silica having BET and CTAB specific areas, respectively noted $S_{BET}$ and $S_{CTAB}$, which meet the relationship :

$$(S_{BET} - S_{CTAB}) \geq 5\ m^2/g$$

**17.** Use according to anyone of claims 13 to 16, said silica having BET and CTAB specific areas which meet the relationship ($S_{BET}$ - $S_{CTAB}$) < 50 $m^2$/g.

**18.** Use according to anyone of claims 13 to 17, said silica having a disagglomeration rate, α, measured by means of the so-called ultrasound disagglomeration test in pulse mode (1 s ON, 1 s OFF), at 100% power of a 600 W ultrasound probe, of at least 0.0035 $\mu m^{-1}.mn^{-1}$.

**Patentansprüche**

**1.** Reifen, der eine Kautschukzusammensetzung auf der Basis von mindestens einem Dienelastomer, einem anorganischen verstärkenden Füllstoff und einem Kopplungsmittel, das die Bindung zwischen dem anorganischen Füllstoff und dem Elastomer gewährleistet, enthält, **dadurch gekennzeichnet, dass** der anorganische Füllstoff mindestens eine Kieselsäure umfasst, die die folgenden Merkmale aufweist:

(a) eine spezifische BET-Oberfläche zwischen 45 und 400 $m^2$/g;
(b) eine spezifische CTAB-Oberfläche zwischen 40 und 380 $m^2$/g;
(c) eine mittlere Teilchengröße (massebezogen), **gekennzeichnet** mit $d_w$, von 20 bis 300 nm;
(d) eine Teilchengrößenverteilung, sodass

$$d_w \geq (16\ 500/CTAB) - 30$$

gilt;
(e) eine Porosität, die das Kriterium

$$L/IF \geq -0{,}0025\ CTAB + 0{,}85$$

erfüllt (worin L und IF für die Breite der Porenverteilung bzw. den Feinheitsindex stehen);
(f) einen Silanolanteil pro Flächeneinheit, **gekennzeichnet** mit $N_{SiOH/nm^2}$, sodass

$$N_{SiOH/nm^2} \leq -0{,}027\ CTAB + 10{,}5$$

gilt.

**2.** Reifen nach Anspruch 1, wobei die Kieselsäure eine spezifische BET-Oberfläche zwischen 80 und 300 $m^2$/g und eine spezifische CTAB-Oberfläche zwischen 70 und 280 $m^2$/g aufweist.

**3.** Reifen nach Anspruch 1 oder 2, wobei die Kieselsäure eine spezifische BET-Oberfläche zwischen 130 und 300 $m^2$/g und eine spezifische CTAB-Oberfläche zwischen 120 und 280 $m^2$/g aufweist.

**4.** Reifen nach einem der Ansprüche 1 bis 3, wobei die Kieselsäure eine spezifische BET- und eine spezifische CTAB-Oberfläche, **gekennzeichnet** mit $S_{BET}$ bzw. $S_{CTAB}$, aufweist, die der Gleichung

$$(S_{BET} - S_{CTAB}) \geq 5\ m^2/g \text{ genügen.}$$

genügen.

**5.** Reifen nach einem der Ansprüche 1 bis 4, wobei die Kieselsäure eine spezifische BET- und eine spezifische CTAB-Oberfläche aufweist, die der Gleichung ($S_{BET}$ - $S_{CTAB}$) < 50 $m^2$/g genügen.

**6.** Reifen nach einem der Ansprüche 1 bis 5, wobei die Kieselsäure eine Desagglomerationsgeschwindigkeit, die mit $\alpha$ **gekennzeichnet** ist und in einem Test der so genannten Ultraschall-Desagglomeration im Pulsbetrieb (1 s ON, 1 s OFF) bei 100%iger Leistung einer 600-W-Ultraschallsonde gemessen wird, von mindestens 0,0035 $\mu m^{-1}.mn^{-1}$ aufweist.

**7.** Reifen nach einem der Ansprüche 1 bis 6, wobei die Kautschukzusammensetzung zudem Ruß umfasst.

**8.** Reifen nach Anspruch 7, wobei der Anteil an Ruß zwischen 2 und 20 Gewichtsteilen beträgt und vorzugsweise in einem Bereich von 5 bis 15 Gewichtsteilen liegt.

**9.** Reifen nach einem der Ansprüche 1 bis 8, wobei das Kopplungsmittel aus Polysulfid-Alkoxysilanen der Formel: worin:

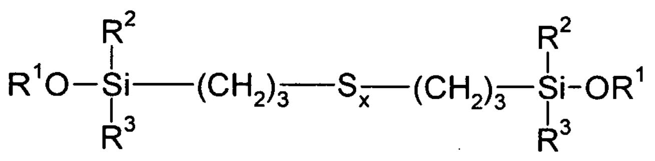

(I)

- die Symbole $R^1$ identisch oder unterschiedlich sind und jeweils für eine einwertige Kohlenwasserstoffgruppe stehen, die aus geradkettigen oder verzweigten Alkylen mit 1 bis 4 Kohlenstoffatomen und aus geradkettigen oder verzweigten Alkoxyalkylen mit 2 bis 8 Kohlenstoffatomen ausgewählt ist;
- die Symbole $R^2$ und $R^3$ identisch oder unterschiedlich sind und jeweils für eine einwertige Kohlenwasserstoffgruppe stehen, die aus geradkettigen oder verzweigten Alkylen mit 1 bis 6 Kohlenstoffatomen und dem Phenylrest ausgewählt ist;
- x eine ganze Zahl oder eine Bruchzahl zwischen 3 und 5 ist, ausgewählt ist.

**10.** Reifen nach Anspruch 9, wobei das Kopplungsmittel aus jenen der folgenden speziellen Formeln (II), (III) oder (IV) ausgewählt ist:

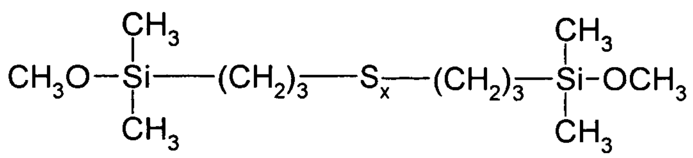

(II)

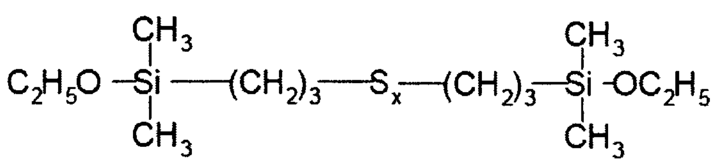

(III)

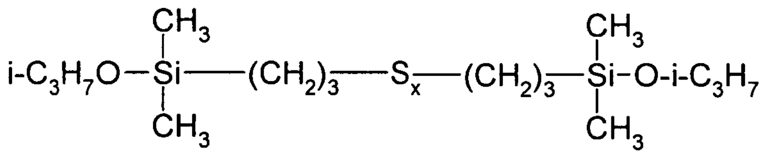

(IV)

worin das Symbol x eine ganze Zahl oder eine Bruchzahl zwischen 3 und 5 ist und vorzugsweise in einem Bereich von 3,5 bis 4,5 liegt.

**11.** Reifen nach Anspruch 10, wobei das Kopplungsmittel Monoethoxydimethylsilylpropyltetrasulfid der Formel (III) ist.

**12.** Reifen nach einem der Ansprüche 1 bis 11, wobei die Kautschukzusammensetzung im Laufstreifen des Reifens vorhanden ist.

**13.** Verwendung einer Kieselsäure zur Herstellung oder Verstärkung eines Reifens, die die folgenden Merkmale aufweist:

(a) eine spezifische BET-Oberfläche zwischen 45 und 400 $m^2/g$ ;
(b) eine spezifische CTAB-Oberfläche zwischen 40 und 380 $m^2/g$;
(c) eine mittlere Teilchengröße (massebezogen), **gekennzeichnet** mit $d_w$, von 20 bis 300 nm;
(d) eine Teilchengrößenverteilung, sodass

$$d_w \geq (16\,500/CTAB) - 30$$

gilt;
(e) eine Porosität, die das Kriterium

$$L/IF \geq -0{,}0025\ CTAB + 0{,}85$$

erfüllt;
(f) einen Silanolanteil pro Flächeneinheit, **gekennzeichnet** mit $N_{SiOH/nm}2$, sodass

$$N_{SiOH/nm}{}^2 \leq -0{,}027\ CTAB + 10{,}5$$

gilt.

**14.** Verwendung nach Anspruch 13, wobei die Kieselsäure eine spezifische BET-Oberfläche zwischen 80 und 300 $m^2/g$ und eine spezifische CTAB-Oberfläche zwischen 70 und 280 $m^2/g$ aufweist.

**15.** Verwendung nach Anspruch 13 oder 14, wobei die Kieselsäure eine spezifische BET-Oberfläche zwischen 130 und 300 $m^2/g$ und eine spezifische CTAB-Oberfläche zwischen 120 und 280 $m^2/g$ aufweist.

**16.** Verwendung nach einem der Ansprüche 13 bis 15, wobei die Kieselsäure eine spezifische BET- und eine spezifische CTAB-Oberfläche, **gekennzeichnet** mit $S_{BET}$ bzw. $S_{CTAB}$, aufweist, die der Gleichung

$$(S_{BET} - S_{CTAB}) \geq 5\ m^2/g \text{ genügen.}$$

**17.** Verwendung nach einem der Ansprüche 13 bis 16, wobei die Kieselsäure eine spezifische BET- und eine spezifische CTAB-Oberfläche aufweist, die der Gleichung($S_{BET}$ - $S_{CTAB}$) < 50 $m^2/g$ genügen.

**18.** Verwendung nach einem der Ansprüche 13 bis 17, **dadurch gekennzeichnet, dass** die Kieselsäure eine Desagglomerationsgeschwindigkeit, die mit $\alpha$ **gekennzeichnet** ist und in einem Test der so genannten Ultraschall-Desagglomeration im Pulsbetrieb (1 s ON, 1 s OFF) bei 100%iger Leistung einer 600-W-Ultraschallsonde gemessen wird, von mindestens 0,0035 $gm^{-1}.mn^{-1}$ aufweist.

# FIGURE 1

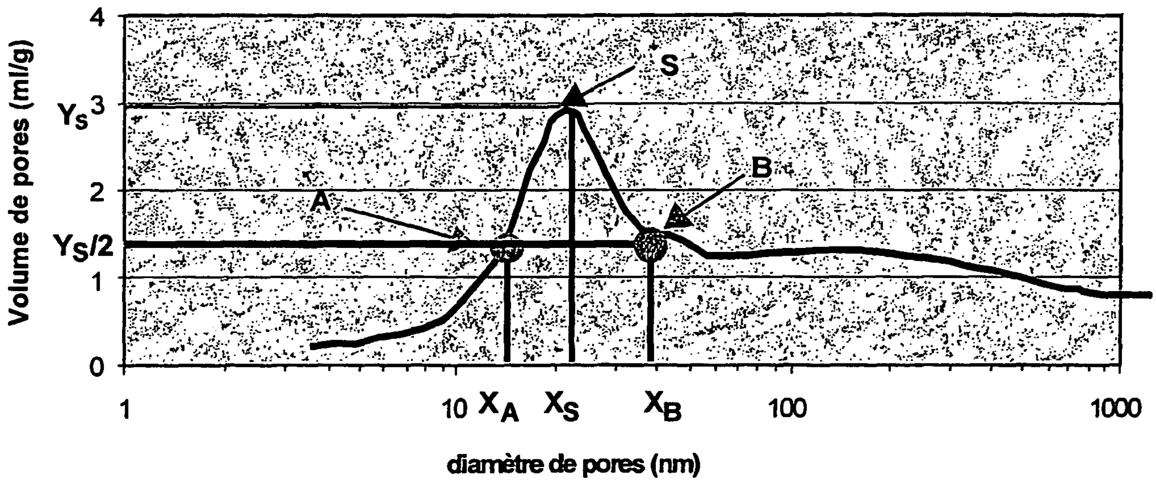
Volume de pores (ml/g)
4
$Y_S$3
2
$Y_S/2$
1
0
S
B
A
1
10 $X_A$
$X_S$
$X_B$
100
1000
diamètre de pores (nm)

FIGURE 2

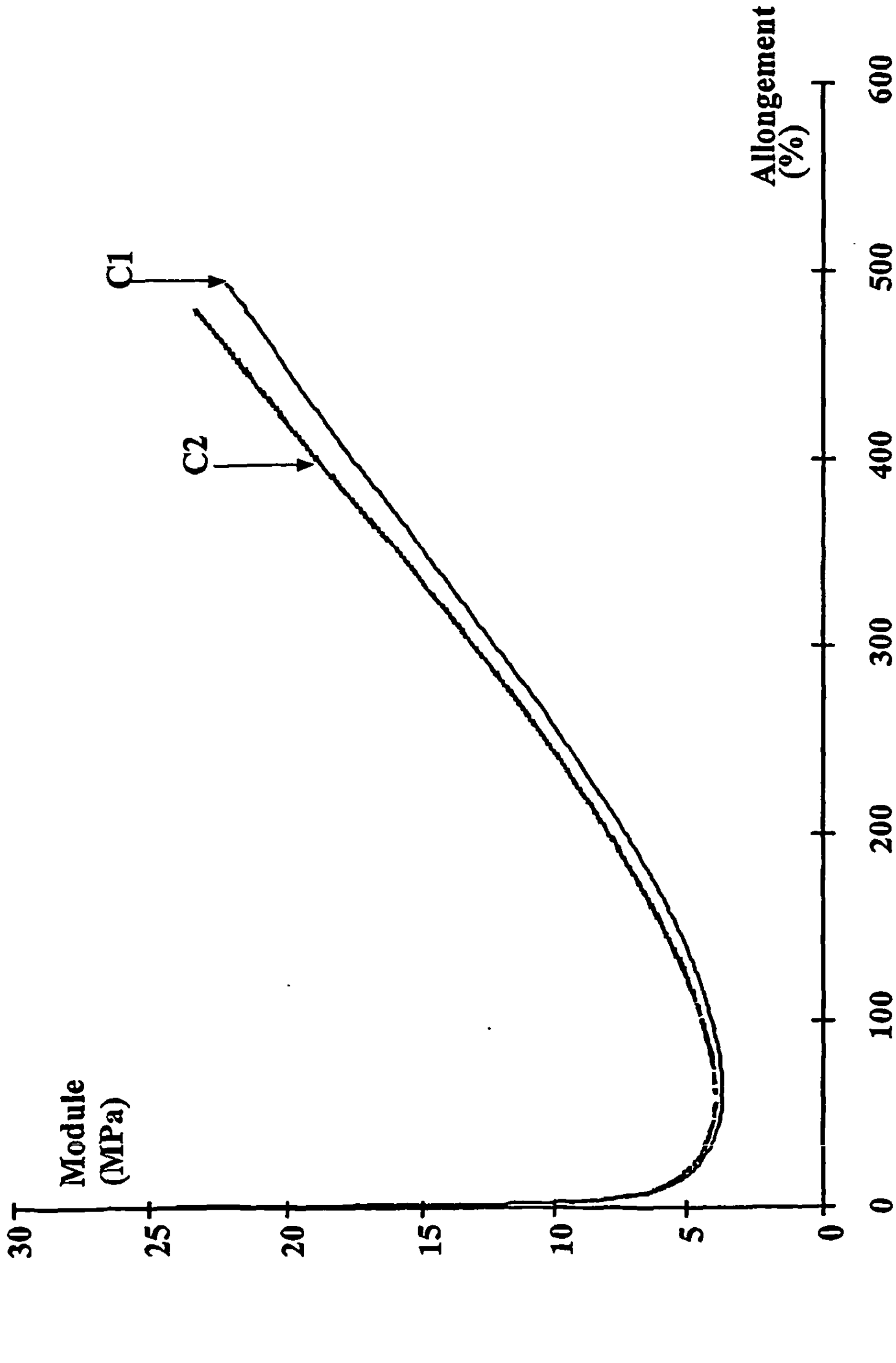
Module
(MPa)
Allongement
(%)
C1
C2
0
5
10
15
20
25
30
0
100
200
300
400
500
600

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 501227 A
- EP 692492 A
- EP 692493 A
- EP 735088 A
- EP 767206 A
- EP 786493 A
- EP 881252 A
- WO 9902590 A
- WO 9902601 A
- WO 9902602 A
- WO 9906480 A
- WO 0005300 A
- WO 0005301 A
- WO 9928376 A
- WO 9928380 A
- WO 0073372 A
- WO 0073373 A
- EP 0735088 A
- EP 0810258 A
- FR 2149339
- FR 2206330
- US 3842111 A
- US 3873489 A
- US 3978103 A
- US 3997581 A
- US 4002594 A
- US 4072701 A
- US 4129585 A
- US 5580919 A
- US 5583245 A
- US 5650457 A
- US 5663358 A
- US 5663395 A
- US 5663396 A
- US 5674932 A
- US 5675014 A
- US 5684171 A
- US 5684172 A
- US 5696197 A
- US 5708053 A
- US 5892085 A
- EP 1043357 A
- EP 0203774 W
- WO 005300 A
- WO 005301 A


### Littérature non-brevet citée dans la description


- **BRUNAUER-EMMETT-TELLER.** *The Journal of the American Chemical Society,* Février 1938, vol. 60, 309
- **G. W. SEARS.** Determination of specific surface area of colloidal silica by titration with sodium hydroxyde. *Analytical Chemistry,* Décembre 1956, vol. 28 (12
- *Plastics, Rubber and Composites Processing and Applications,* 1996, vol. 25 (7), 327
- *Rubber Chemistry and Technology,* 1996, vol. 69, 325